# EUROPEAN PATENT APPLICATION

(11) **EP 4 700 532 A1**
(43) Date of publication of application: **25.02.2026**
(21) Application number: 24807599.6
(22) Date of filing: 17.05.2024
(51) Int. Cl.: G06F 1/16, G06F 1/18, H04R 1/28

(54) **ELECTRONIC DEVICE COMPRISING SPEAKER**

(30) Priority: 18.05.2023 KR 20230064578; 23.06.2023 KR 20230080998
(71) Applicant: Samsung Electronics Co., Ltd., Suwon-si, Gyeonggi-do 16677 (KR)
(72) Inventor: RHEE, Minsu, Suwon-si, Gyeonggi-do 16677 (KR); MUN, Byunghee, Suwon-si, Gyeonggi-do 16677 (KR); PARK, Youngho, Suwon-si, Gyeonggi-do 16677 (KR)
(74) Representative: Gulde & Partner
(86) International application number: PCT/KR2024/006730
(87) International publication number: WO 2024/237728

(57) **Abstract**

According to an example embodiment of the present disclosure, an electronic device may be provided, the electronic device comprising: a housing at least partially forming the front surface of the electronic device, the rear surface of the electronic device, and the side surface of the electronic device; a display module which is accommodated in the housing and is visibly seen through the front surface of the electronic device; a speaker located between the display module and the rear surface; a speaker housing accommodating the speaker; and a metal plate which is located between the display module and the speaker and is disposed in the speaker housing, wherein the metal plate comprises a magnetic force shielding material and has a first surface facing the speaker and a second surface facing a direction opposite to the first surface. The first surface comprises a first area overlapping the speaker and a second area at least partially surrounding the first area, when seen from above the front surface of the electronic device, and the second area comprises a first protrusion and a second protrusion protruding toward the rear surface of the electronic device with respect to the first area, wherein the second protrusion is located between the first protrusion and the first area.

## Description

### [Technical Field]

The disclosure relates to an electronic device including a speaker.

### [Background Art]

An electronic device may include a speaker.

The above information may be presented as background information only to assist with an understanding of the disclosure. No determination has been made, and no assertion is made, as to whether any of the above might be applicable as prior art with regard to the disclosure.

### [Disclosure of Invention]

### [Technical Problem]

The magnetic force of a speaker can affect surrounding electrical components, thereby degrading their performance.

Embodiments of the disclosure provide an electronic device including a speaker to reduce or prevent the leakage of magnetic force from the speaker to surrounding electrical components. Various embodiments of the disclosure are provided to solve or at least alleviate the aforementioned problem.

The technical problems to be solved in the disclosure are not limited to those mentioned above, and other technical problems not mentioned can be clearly understood from the description below by a person skilled in the technical field to which the disclosure belongs.

### [Solution to Problem]

According to an example embodiment of the disclosure, an electronic device is provided, and the electronic device includes a housing, a display module, a speaker, a speaker housing, and a metal plate. The housing forms at least in part a front surface of the electronic device, a rear surface of the electronic device, and a side surface of the electronic device. The display module is accommodated in the housing and visually seen through the front surface of the electronic device. The speaker is positioned between the display module and the rear surface of the electronic device. The speaker housing accommodates the speaker. The metal plate is positioned between the display module and the speaker and disposed in the speaker housing. The metal plate includes a magnetic shielding material. The metal plate includes a first surface facing the speaker and a second surface facing in an opposite direction to the first surface. The first surface includes a first region overlapping with the speaker and a second region surrounding at least in part the first region when viewed from above the front surface of the electronic device. The second region includes a first protrusion and a second protrusion protruding toward the rear surface of the electronic device with respect to the first region. The second protrusion is positioned between the first protrusion and the first region.

According to an example embodiment of the disclosure, a speaker assembly is provided, and the speaker assembly includes a speaker housing, a speaker, and a metal plate. The speaker is accommodated in the speaker housing. The metal plate is disposed in the speaker housing. The metal plate includes a magnetic shielding material. The metal plate includes a first surface facing the speaker and a second surface opposite the first surface. The first surface includes a first region overlapping with the speaker and a second region surrounding at least in part the first region. The second region includes a first protrusion and a second protrusion protruding with respect to the first region. The second protrusion is positioned between the first protrusion and the first region.

### [Advantageous Effects of Invention]

An electronic device including a speaker according to embodiments of the disclosure can secure the performance of surrounding electrical components (e.g., a display module or an electromagnetic induction panel) by reducing or preventing the magnetic force of the speaker from leaking to the surrounding electrical components.

In addition, the effects that can be obtained or expected according to various embodiments of the disclosure are directly or implicitly disclosed in the detailed description of the embodiments of the disclosure.

### [Brief Description of Drawings]

The above and other aspects, features, and advantages of embodiments of the disclosure will become more apparent from the following detailed description taken in conjunction with the accompanying drawings.
FIG. 1 is a block diagram of an example electronic device in a network environment, according to an embodiment of the disclosure.
FIG. 2 is a view illustrating various appearances of an example electronic device, according to an embodiment of the disclosure.
FIG. 3 illustrates a perspective view of a portion of an example electronic device and a cross-sectional view of a display module, according to an embodiment of the disclosure.
FIGS. 4 and 5 are perspective views of a first speaker assembly, according to an embodiment of the disclosure.
FIG. 6 is an exploded perspective view of a first speaker assembly, according to an embodiment of the disclosure.
FIG. 7 is a cross-sectional view of a first speaker, according to an embodiment of the disclosure.
FIG. 8 is a cross-sectional view of a portion of an example electronic device taken along line A-A' of FIG. 3, according to an embodiment of the disclosure.
FIG. 9 illustrates a portion denoted designated by reference numeral 'B' of FIG. 8, according to an embodiment of the disclosure.
FIG. 10 is a cross-sectional view of a portion of an example electronic device taken along line A-A' of FIG. 3, according to an embodiment of the disclosure.
FIG. 11 illustrates a portion denoted by reference numeral 'D' in FIG. 10, according to an embodiment of the disclosure.
FIG. 12 is a view illustrating a portion of a first metal plate, according to an embodiment of the disclosure.
FIG. 13 is a view illustrating a portion of a first metal plate, according to an embodiment of the disclosure.
FIG. 14 is a view illustrating a portion of a first metal plate, according to an embodiment of the disclosure.
FIG. 15 is a view illustrating a portion of a first metal plate, according to an embodiment of the disclosure.
FIG. 16 is a view illustrating a portion of a first metal plate, according to an embodiment of the disclosure.
FIG. 17 is a view illustrating a portion of a first metal plate, according to an embodiment of the disclosure.
FIG. 18 is a view illustrating a first speaker assembly, according to an embodiment of the disclosure.
FIG. 19 is a cross-sectional view of a portion of a first speaker assembly taken along line F-F' of FIG. 19, according to an embodiment of the disclosure.
FIG. 20 is a perspective view of a portion of an example electronic device, according to an embodiment of the disclosure.
FIG. 21 is a view illustrating a second speaker assembly, according to an embodiment of the disclosure.

### [Mode for the Invention]

Hereinafter, various embodiments of the disclosure disclosed herein will be described in greater detail with reference to the accompanying drawings.

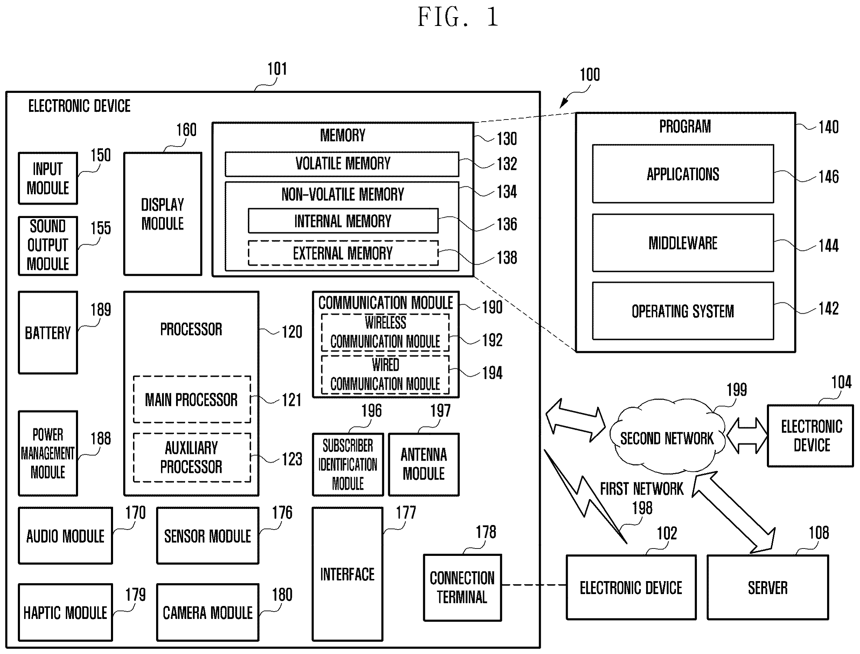

FIG. 1 is a block diagram of an electronic device 101 in a network environment 100 according to an embodiment of the disclosure.

Referring to FIG. 1, the electronic device 101 in the network environment 100 may communicate with an external electronic device 102 via a first network 198 (e.g., a short-range wireless communication network), or at least one of an external electronic device 104 or a server 108 via a second network 199 (e.g., a long-range wireless communication network). The electronic device 101 may communicate with the external electronic device 104 via the server 108. The electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, and/or an antenna module 197. In various embodiments of the disclosure, at least one (e.g., the connection terminal 178) of the components may be omitted from the electronic device 101, or one or more other components may be added in the electronic device 101. In various embodiments of the disclosure, some of the components may be implemented as single integrated circuitry. For example, the sensor module 176, the camera module 180, or the antenna module 197 may be implemented as embedded in single component (e.g., the display module 160).

The processor 120 may execute, for example, software (e.g., a program 140) to control at least one other component (e.g., a hardware or software component) of the electronic device 101 coupled with the processor 120, and may perform various data processing or computation. As at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. The processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). The auxiliary processor 123 (e.g., an ISP or a CP) may be implemented as part of another component (e.g., the camera module 180 or the communication module 190) functionally related to the auxiliary processor 123. According to an embodiment of the disclosure, the auxiliary processor 123 (e.g., a neural network processing device) may include a hardware structure specified for processing an artificial intelligence model. The artificial intelligence model may be created through machine learning. Such learning may be performed, for example, in the electronic device 101 itself on which the artificial intelligence model is performed, or may be performed through a separate server (e.g., the server 108). The learning algorithms may include, for example, supervised learning, unsupervised learning, semi-supervised learning, or reinforcement learning, but is not limited thereto. The artificial intelligence model may include a plurality of artificial neural network layers. The artificial neural network may be any of a deep neural network (DNN), a convolutional neural network (CNN), a recurrent neural network (RNN), a restricted Boltzmann machine (RBM), a deep belief network (DBN), a bidirectional recurrent DNN (BRDNN), a deep Q-network, or a combination of two or more of the above-mentioned networks, but is not limited the above-mentioned examples. In addition to the hardware structure, the artificial intelligence model may additionally or alternatively include a software structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 and/or the non-volatile memory 134.

The program 140 may be stored in the memory 130 as software, and may include, for example, an operating system (OS) 142, middleware 144, and/or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record, and the receiver may be used for incoming calls. The receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. The display module 160 may include touch circuitry (e.g., a touch sensor) adapted to detect a touch, or sensor circuitry (e.g., a pressure sensor) adapted to measure the intensity of force incurred by the touch.

The audio module 170 may convert a sound into an electrical signal and vice versa. The audio module 170 may obtain the sound via the input module 150, or output the sound via the sound output module 155 or a headphone of an external electronic device (e.g., the external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. The interface 177 may include, for example, a high-definition multimedia interface (HDMI), a universal serial bus (USB) interface, a secure digital (SD) card interface, and/or an audio interface.

The connecting terminal 178 may include a connector via which the electronic device 101 may be physically connected with the external electronic device (e.g., the external electronic device 102). The connecting terminal 178 may include, for example, an HDMI connector, a USB connector, an SD card connector, and/or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. The haptic module 179 may include, for example, a motor, a piezoelectric element, or an electric stimulator.

The camera module 180 may capture a still image or moving images. The camera module 180 may include one or more lenses, image sensors, ISPs, or flashes.

The power management module 188 may manage power supplied to or consumed by the electronic device 101. The power management module 188 may be implemented as at least part of, for example, a power management integrated circuit (PMIC).

The battery 189 may supply power to at least one component of the electronic device 101. The battery 189 may include, for example, a poutlineary cell which is not rechargeable, a secondary cell which is rechargeable, and/or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more CPs that are operable independently from the processor 120 (e.g., the AP) and supports a direct (e.g., wired) communication or a wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BLUETOOTH, wireless-fidelity (Wi-Fi) direct, or IR data association (IrDA)) or the second network 199 (e.g., a long-range communication network, such as a legacy cellular network, a 5^{th} generation (5G) network, a next generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4^{th} generation (4G) network, and next-generation communication technology, e.g., new radio (NR) access technology. The NR access technology may support high-speed transmission of high-capacity data (i.e., enhanced mobile broadband (eMBB)), minimization of terminal power and connection of multiple terminals (massive machine type communications (mMTC)), or high reliability and low latency (ultra-reliable and low-latency communications (URLLC)). The wireless communication module 192 may support a high-frequency band (e.g., mmWave band) to achieve, for example, a high data transmission rate. The wireless communication module 192 may support various technologies for securing performance in a high-frequency band, such as beamforming, massive multiple-input and multiple-output (MIMO), full-dimensional MIMO (FD-MIMO), array antenna, analog beamforming, or large-scale antenna. The wireless communication module 192 may support various requirements specified in the electronic device 101, an external electronic device (e.g., the external electronic device 104), or a network system (e.g., the second network 199). According to an embodiment of the disclosure, the wireless communication module 192 may support a peak data rate for implementing eMBB (e.g., 20 Gbps or more), loss coverage for implementing mMTC (e.g., 164 dB or less), or U-plane latency for realizing URLLC (e.g., 0.5 ms or less for each of downlink (DL) and uplink (UL) or 1ms or less for round trip).

The antenna module 197 may transmit or receive a signal or power to or from the outside (e.g., the external electronic device) of the electronic device 101. The antenna module 197 may include an antenna including a radiating element including a conductive material or a conductive pattern formed in or on a substrate (e.g., a printed circuit board (PCB)). The antenna module 197 may include a plurality of antennas (e.g., an antenna array). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. Another component (e.g., a radio frequency integrated circuit (RFIC)) other than the radiating element may be additionally formed as part of the antenna module 197.

According to various embodiments of the disclosure, the antenna module 197 may form an mmWave antenna module. According to an embodiment of the disclosure, the mmWave antenna module may include a PCB, an RFIC that is disposed on or adjacent to a first surface (e.g., the bottom surface) of the PCB and is capable of supporting a predetermined high-frequency band (e.g., a mmWave band), and a plurality of antennas (e.g., array antennas) that is disposed on or adjacent to a second surface (e.g., the top surface or the side surface) of the PCB and is capable of transmitting or receiving a signal of the predetermined high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

Commands or data may be transmitted or received between the electronic device 101 and the external electronic device 104 via the server 108 coupled with the second network 199. Each of the external electronic devices 102 or 104 may be a device of a same type as, or a different type, from the electronic device 101. All or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide an ultra-low delay service using, for example, distributed computing or MEC. In another embodiment of the disclosure, the external electronic device 104 may include an internet of things (IoT) device. The server 108 may be an intelligent server using machine learning and/or neural networks. According to an embodiment of the disclosure, the external electronic device 104 or the server 108 may be included in the second network 199. The electronic device 101 may be applied to an intelligent service (e.g., a smart home, a smart city, a smart car, or healthcare) based on 5G communication technology or IoT-related technology.

An electronic device according to an embodiment of the disclosure may be one of various types of electronic devices. The electronic devices may include a portable communication device (e.g., a smartphone), a computer device, a portable multimedia device, a portable medical device, a camera, a wearable device, or a home appliance. However, the electronic device is not limited to any of those described above.

Various embodiments of the disclosure and the terms used herein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. As used herein, such terms as "1^{st}" and "2^{nd}" or "first" and "second" may be used to simply distinguish a corresponding component from another, and does not limit the components in other aspect (e.g., importance or order). If an element (e.g., a first element) is referred to, with or without the term "operatively" or "communicatively", as "coupled with", "coupled to", "connected with", or "connected to" another element (e.g., a second element), the element may be coupled with the other element directly (e.g., wiredly), wirelessly, or via a third element.

The term "module" may include a unit implemented in hardware, software, or firmware, or any combination thereof, and may interchangeably be used with other terms, for example, "logic", "logic block", "part", or "circuitry". A module may be a single integral component, or a minimum unit or part thereof, adapted to perform one or more functions. For example, according to an embodiment of the disclosure, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A method according to an embodiment of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PLAYSTORE^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

Each component (e.g., a module or a program) of the above-described components may include a single entity or multiple entities. One or more of the above-described components may be omitted, or one or more other components may be added. Alternatively or additionally, a plurality of components (e.g., modules or programs) may be integrated into a single component. In such a case, the integrated component may perform one or more functions of each of the plurality of components in the same or similar manner as they are performed by a corresponding one of the plurality of components before the integration. Operations performed by the module, the program, or another component may be carried out sequentially, in parallel, repeatedly, or heuristically, or one or more of the operations may be executed in a different order or omitted, or one or more other operations may be added.

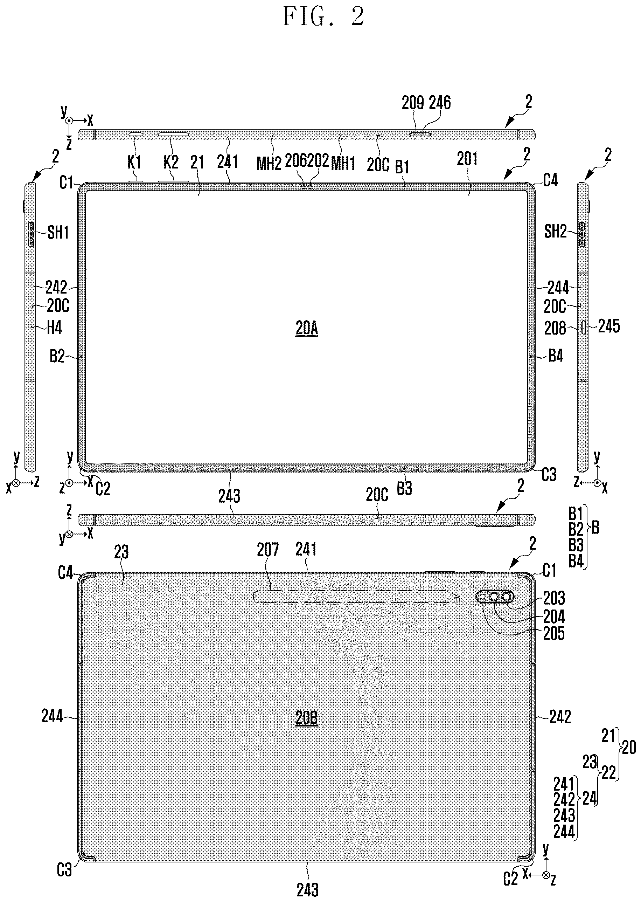

FIG. 2 is a view illustrating various appearances of an example electronic device 2, according to an embodiment of the disclosure.

In various embodiments of the disclosure, for convenience of explanation, the direction (e.g., +z axis direction) in which a display area (or active area or screen area) included in the electronic device 2 is visible is defined as a front surface 20A of the electronic device 2, and the opposite direction (e.g., -z axis direction) is defined as a rear surface 20B of the electronic device 2.

Referring to FIG. 2, the electronic device 2 may include a housing 20, a display module 201, a first camera module 202, a second camera module 203, a third camera module 204, a light-emitting module 205, a sensor module 206, a first audio input module (not shown separately), a second audio input module (not shown separately), a first audio output module (not shown separately), a second audio output module (not shown separately), a key input module, a pen input device 207, a connector 208 (e.g., a first connection terminal), and/or a tray 209 (or adapter). Although not shown separately, the electronic device 2 may omit at least one of the above components or may further include other components.

According to various embodiments, the electronic device 2 may include the electronic device 101 of FIG. 1, or may include one or more components among a plurality of components included in the electronic device 1.

According to an embodiment, the housing 20 may provide (or form) at least in part the exterior appearance of the electronic device 2. The housing 20 may, for example, provide (or form) at least in part the front surface 20A of the electronic device 2, the rear surface 20B of the electronic device 2, and/or side surfaces 20C of the electronic device 2. In various embodiments, the housing 20 may refer to a structure that provides at least a part of the front surface 20A, the rear surface 20B, and the side surface 20C.

According to an embodiment, the housing 20 may include a front plate 21 (or front cover) and a frame 22 (or case).

According to an embodiment, the front plate 21 may provide (or form) at least in part the front surface 20A of the electronic device 2. The front plate 21 may be substantially transparent at least in part. The front plate 21 may include, for example, a glass plate including various coating layers, or a polymer plate.

According to an embodiment, the frame 22 may provide (or form) at least in part the rear surface 20B and the side surfaces 20C of the electronic device 2. The frame 22 may be substantially opaque. The frame 22 may include a metallic material and/or a non-metallic material (e.g., a polymer).

According to an embodiment, the frame 22 may include a rear portion 23 and/or a lateral portion 24. The rear portion 23 may provide (or form) at least in part the rear surface 20B of the electronic device 2. The lateral portion 24 (e.g., a side) may provide (or form) at least in part the side surface 20C of the electronic device 2.

According to an embodiment, the frame 22 may be provided (or formed) as a combination of metal (or metal structure, conductor, or conductive structure) (not shown separately) and non-metal (or non-metal structure, non-conductor, or non-conductive structure) (not shown separately). A part of the metal may provide a part of the rear portion 23, and another part of the metal may provide a part of the lateral portion 24. The metal may be provided (or formed) as, for example, an integrated or single structure (e.g., a single continuous structure or a complete structure). A part of the non-metal may provide a part of the rear portion 23, and another part of the non-metal may provide a part of the lateral portion 24. The non-metal may be provided (or formed) as, for example, an integrated or single structure (e.g., a single continuous structure or a complete structure).

According to various embodiments, although not shown separately, a rear plate (or rear cover) corresponding to the rear portion 23 and a lateral member (or lateral bezel, lateral bezel structure, or side) corresponding to the lateral portion 24 may be provided (or formed) in place of the frame 22. The rear plate may be substantially opaque and may be formed of, for example, coated or colored glass, ceramic, polymer, metal (e.g., aluminum, stainless steel, or magnesium), or a combination of at least two of the above materials.

According to an embodiment, the lateral portion 24 may include a first lateral portion 241 (or, first side, first sidewall, first sidewall portion, first bezel, or first bezel portion), a second lateral portion 242 (or, second side, second sidewall, second sidewall portion, second bezel, or second bezel portion), a third lateral portion 243 (or, third side, third sidewall, third sidewall portion, third bezel, or third bezel portion), and/or a fourth lateral portion 244 (or, fourth side, fourth sidewall, fourth sidewall portion, fourth bezel, or fourth bezel portion).

According to an embodiment, when viewed from above the front surface 20A of the electronic device 2 (e.g., when viewed in the -z-axis direction), the first lateral portion 241 may be positioned spaced apart from the third lateral portion 243 in a first direction (e.g., in the +y-axis direction) and may be substantially parallel to the third lateral portion 243. The first lateral portion 241 may provide (or form) a first side surface corresponding to the first direction among the side surfaces 20C of the electronic device 2. The third lateral portion 2430 may provide (or form) a third side surface corresponding to a second direction (e.g., -y-axis direction) opposite to the first direction among the side surfaces 20C of the electronic device 2.

According to an embodiment, the second lateral portion 242 may connect one end of the first lateral portion 241 and one end of the third side 243. The fourth lateral portion 244 may connect the other end of the first lateral portion 241 and the other end of the third side 243. When viewed from above the front surface 20A of the electronic device 2, the fourth lateral portion 244 may be positioned spaced apart from the second lateral portion 242 in a third direction (e.g., +x-axis direction) and may be substantially parallel to the second lateral portion 242. The second lateral portion 242 may provide (or form) a second side surface corresponding to a fourth direction (e.g., -x-axis direction) opposite to the third direction among the side surfaces 20C of the electronic device 2. The fourth lateral portion 244 may provide (or form) a fourth side surface corresponding to the third direction among the side surfaces 20C of the electronic device 2.

According to an embodiment, a first corner C1 where the first lateral portion 241 and the second lateral portion 242 are connected, a second corner C2 where the second lateral portion 242 and the third lateral portion 243 are connected, a third corner C3 where the third lateral portion 243 and the fourth lateral portion 244 are connected, and/or a fourth corner C4 where the first lateral portion 241 and the fourth lateral portion 244 are connected may be implemented as a smooth curved shape.

According to an embodiment, the display module 201 is accommodated in the housing 20, and the display area (or active area or screen area) of the display module 201 may be visually seen (or may be visually exposed) through the front plate 21.

According to an embodiment, the front plate 21 may include a bezel area B. The bezel area B may not overlap with the display area of the display module 201 when viewed from above the front surface 20A of the electronic device 2. The bezel area B may be provided (or formed) in a shape (e.g., a rectangular ring or loop shape) that surrounds the display area when viewed from above the front surface 20A. The bezel area B may be substantially opaque. For example, the bezel area B may be provided (or formed) by an opaque material coated or colored on the front plate 21. The bezel area B may include a first bezel area B1, a second bezel area B2, a third bezel area B3, and/or a fourth bezel area B4. The first bezel area B1 may be positioned adjacent to and corresponding to the first lateral portion 241. The second bezel area B2 may be positioned adjacent to and corresponding to the second lateral portion 242. The third bezel area B3 may be positioned adjacent to and corresponding to the third lateral portion 243. The fourth bezel area B4 may be positioned adjacent to and corresponding to the fourth lateral portion 244.

According to an embodiment, the first camera module 202, the second camera module 203, and/or the third camera module 204 may include one or more lenses, image sensor(s), and/or image signal processor (ISP).

According to an embodiment, the first camera module 202 may be accommodated in the housing 20, corresponding to the front surface 20A of the electronic device 2. External light may pass through the front plate 21 to reach the first camera module 202. The first camera module 202 may be defined or interpreted as a 'front camera module'.

According to an embodiment, the first camera module 202 may be accommodated in the housing 20, corresponding to the first bezel area B of the front plate 21. The front plate 21 may include a first transparent area (or a first light-transmitting area) positioned in the first bezel area B. External light may pass through the first transparent area to reach the first camera module 202.

According to various embodiments, although not shown separately, the display area of the display module 201 may be implemented as large as possible so that the bezel area B may be reduced or substantially omitted, unlike the illustrated example. The first camera module 202 may overlap with the display area of the display module 201 when viewed from above the front surface 20A of the electronic device 2. The first camera module 202 may be positioned on a rear surface of the display area or below or beneath the display area. When viewed from the outside of the electronic device 2, the first camera module 202 or the position of the first camera module 202 may be substantially visually indistinguishable (or invisible). The first camera module 202 may include, for example, a hidden display rear camera (e.g., an under display camera (UDC)). External light may pass through the front plate 21 and the display area to reach the first camera module 202.

According to various embodiments, when the first camera module 202 is implemented as a hidden display rear camera, the first camera module 202 may be positioned in alignment with or at least partially inserted into an opening (not shown separately) provided in the display area of the display module 201. External light may pass through the front plate 21 and the opening of the display area to reach the first camera module 202. The opening of the display area aligned with or overlapping with the first camera module 202 may be provided in the form of a hole. **In** various embodiments, when viewed from above the front surface 20A of the electronic device 2, the opening of the display area aligned with or overlapping with the first camera module 202 may be provided as a notch (not shown separately).

According to various embodiments, when the first camera module 202 is implemented as a hidden display rear camera, the first camera module 202 may be positioned in alignment with or at least partially inserted into a recess (not shown separately) provided on the rear surface of the display area.

According to various embodiments, although not shown separately, when the first camera module 202 is implemented as a hidden display rear camera, a portion of the display area of the display module 201 that at least partially overlaps with the first camera module 202 may include a different pixel and/or wiring structure compared to the other portion of the area. The pixel structure and/or wiring structure provided in the portion of the display area that at least partially overlaps with the first camera module 202 may be implemented so as to reduce light loss between the exterior of the electronic device 2 and the first camera module 202. A portion of the display area that at least partially overlaps with the first camera module 202 may have, for example, a different pixel density (e.g., the number of pixels per unit area) than the other portion. For example, a portion of the display area that at least partially overlaps with the first camera module 202 may not substantially include a plurality of pixels.

According to an embodiment, the second camera module 203 and the third camera module 204 may be provided corresponding to the rear surface 20B of the electronic device 2. The second camera module 203 may be defined or interpreted as a 'first rear camera module', and the third camera module 204 may be defined or interpreted as a 'second rear camera module'. Although not shown separately, the positions or number of the plurality of rear camera modules, such as the second camera module 203 and the third camera module 204, are not limited to the illustrated example and may be varied.

According to an embodiment, the second camera module 203 may be positioned corresponding to a first camera hole provided (or formed) in the rear portion 23 of the frame 22 and may be visually seen from the outside of the electronic device 2 through the first camera hole. The third camera module 204 may be positioned corresponding to a second camera hole provided (or formed) in the rear portion 23 of the frame 22 and may be visually seen from the outside of the electronic device 2 through the second camera hole. In various embodiments, the rear portion 23 of the frame 22 may include a first light-transmitting area replacing the first camera hole and/or a second light-transmitting area replacing the second camera hole.

According to various embodiments, the second camera module 203 and/or the third camera module 204 may include a wide-angle camera module, a telephoto camera module, a color camera module, a monochrome camera module, or an IR camera (e.g., a time of flight (TOF) camera, a structured light camera) module.

According to an embodiment, the second camera module 203 and/or the third camera module 204 may have different properties (e.g., angles of view) or functions.

According to various embodiments, the second camera module 203 and/or the third camera module 204 may provide different angles of view (or lenses with different angles of view). The electronic device 2 may selectively use the angles of view of the second camera module 203 and/or the third camera module 204 based on a user's selection regarding the angle of view.

According to an embodiment, the light-emitting module 205 may be provided corresponding to the rear surface 20B of the electronic device 2. The light-emitting module 205 may be positioned corresponding to a flash hole or light-transmitting area provided (or formed) on the rear portion 23 of the frame 22. The light-emitting module 205 may include a light source for the second camera module 203 and/or the third camera module 204. The light-emitting module 205 may include, but is not limited to, an LED, an IR LED, or a xenon lamp.

According to various embodiments, the electronic device 2 may include another light-emitting module (e.g., an LED, an IR LED, or a xenon lamp) (not shown separately) accommodated in the housing 20 corresponding to the front surface 20A of the electronic device 2. This light-emitting module may provide status information of the electronic device 2 in the form of light and/or provide a light source that is linked to the operation of the first camera module 202.

According to an embodiment, the sensor module 206 may be accommodated in the housing 20 corresponding to the front surface 20A of the electronic device 2. The sensor module 206 may include, for example, an optical sensor (e.g., a proximity sensor or a light sensor).

According to an embodiment, the sensor module 206 may be accommodated in the housing 20, corresponding to the first bezel area B of the front plate 21. The front plate 21 may include a second transparent area (or a second light-transmitting area) located in the first bezel area B. External light may pass through the second transparent area to reach the sensor module 206.

According to various embodiments, the sensor module 206 may overlap with the display area when viewed from above the front surface 20A of the electronic device 2, in a manner at least partially identical or similar to the example in which the first camera module 202 overlaps with the display area of the display module 201. The sensor module 206 may be positioned on the rear surface of the display area or below or beneath the display area. When viewed from the outside of the electronic device 2, the sensor module 206 or the position of the sensor module 206 may be substantially invisible or indistinguishable.

According to various embodiments, the electronic device 2 may include at least one other sensor module (not shown separately) provided in various other locations. For example, the electronic device 2 may include a biometric sensor module (e.g., a fingerprint recognition sensor module) of an optical, capacitive, or ultrasonic type. For example, the biometric sensor module may overlap with the display area when viewed from above the front surface 20A of the electronic device 2, in a manner at least partially identical or similar to the example in which the first camera module 202 overlaps with the display area of the display module 201.

According to an embodiment, the first audio input module (not shown separately) may include a first microphone. The first microphone may be accommodated in the housing 20, corresponding to, for example, a first microphone hole MH1 (or first hole) provided (or formed) in the first lateral portion 241. The second audio input module (not shown separately) may include a second microphone. The second microphone may be accommodated in the housing 20, corresponding to, for example, a second microphone hole MH2 (or second hole) provided (or formed) in the first lateral portion 241. Although not shown separately, the positions or number of microphones and corresponding microphone holes are not limited to the illustrated example and may be varied.

According to an embodiment, the electronic device 2 may perform noise-cancelling through one or more microphones.

According to an embodiment, the electronic device 2 may be configured to detect the direction of sound outside the electronic device 2 through a plurality of microphones.

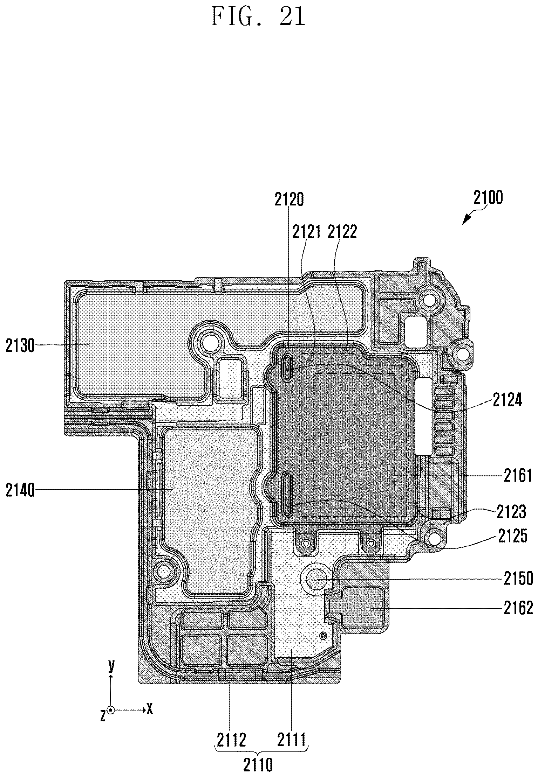

According to an embodiment, the first audio output module (not shown separately) may include a first speaker. The first speaker may be accommodated in the housing 20, corresponding to, for example, a first speaker hole SH1 (or third hole) provided (or formed) in the second lateral portion 242. The second audio output module (not shown separately) may include a second speaker (e.g., the second speaker 2161 in FIG. 21). The second speaker may be accommodated in the housing 20, corresponding to, for example, a second speaker hole SH2 (or fourth hole) provided (or formed) in the fourth lateral portion 244. Although not shown separately, the positions or number of speakers and corresponding speaker holes may be varied.

According to various embodiments, the first audio output module may include a first piezo speaker, and the first speaker hole SH1 may be omitted. The second sound output module may include a second piezo speaker, and the second speaker hole SH2 may be omitted.

According to various embodiments, a single hole (not shown separately) replacing at least one of the first and second microphone holes MH1 and MH2 and at least one of the first and second speaker holes SH1 and SH2 may be provided (or formed) in the lateral portion 24 of the frame 22.

According to an embodiment, the key input module may include a first key K1 (e.g., a first side key), a second key K2 (e.g., a second side key), and/or a key signal generator (or a key signal generation circuit) (not shown separately). For example, the first key K1 may be positioned in a first key hole provided (or formed) in the first lateral portion 241 of the frame 22, and the second key K2 may be positioned in a second key hole provided (or formed) in the first lateral portion 241 of the frame 22. The key signal generator may be accommodated in the housing 20. The key signal generator may generate a first key signal corresponding to a press or touch of the first key K1 and a second key signal corresponding to a press or touch of the second key K2. The positions or number of key input modules or keys are not limited to the illustrated example and may be varied.

According to an embodiment, the pen input device 207 (e.g., a stylus pen) may be detachably attached to the housing 20. The pen input device 207 may be detachably attached to, for example, the rear surface 20B of the electronic device 2. Although not shown separately, the pen input device 207 may be detachably attached to the side surfaces 20C or front surface 20A of the electronic device 2. The pen input device 207 may be attached to the housing 20 via the attractive force between magnetic materials, but is not limited thereto, and may be placed in the housing 20 through a variety of other methods, such as a method of being inserted into the interior of the housing 20.

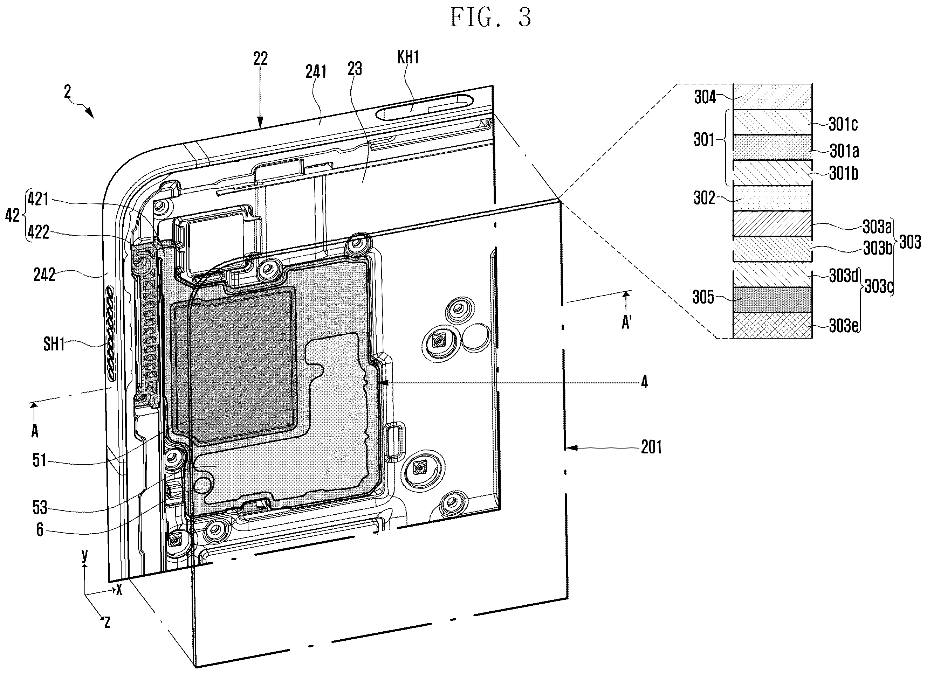

According to an embodiment, the pen input device 207 may be implemented in an electromagnetic induction manner (e.g., an electromagnetic resonance (EMR) manner). The pen input device 207 may include a resonant circuit and may be implemented to interact with an electromagnetic induction panel (e.g., the electromagnetic induction panel 305 in FIG. 3) included in the electronic device 2.

According to an embodiment, the connector 208 may be accommodated in the housing 20, corresponding to a connector hole 245 provided (or formed) in the lateral portion 24 of the frame 22. The connector hole 245 may be located, for example, in the fourth lateral portion 244. The electronic device 2 may transmit and/or receive power and/or data to and/or from an external electronic device (e.g., the external electronic device 102 or 104 in FIG. 1) electrically connected to the connector 208. The connector 208 may include, for example, a USB connector or an HDMI connector. The positions or number of the connector hole 245 and the corresponding connector 208 are not limited to the illustrated example and may be varied.

According to an embodiment, the tray 209 may be inserted into a socket (e.g., a second connection terminal) (not illustrated separately) through a tray hole 246 provided (or formed) in the lateral portion 24 of the frame 22. The tray 209 may connect an external storage medium (not illustrated separately) and the socket. The external storage medium may be detachably attached to the tray 209. When the tray 209 on which the external storage medium is placed is inserted into the socket through the tray hole 246, the external storage medium may be electrically connected to the socket. The tray 209 may be referred to as various other terms, such as an 'external storage medium tray' (e.g., a SIM tray or a SIM card tray), an 'external storage medium support' (e.g., a SIM support or a SIM card support), an 'external storage medium support member' (e.g., a SIM support member or a SIM card support member), or an 'external storage medium holder'. The external storage medium may include, for example, a SIM card or a universal SIM (USIM) card. The external storage medium may include, for example, memory card, such as a compact flash (CF), a multimedia card (MMC), a smart media card (SMC), a secure disk (SD), or memory stick (MS). A combination of the socket and the tray 209 may be for one external storage medium, but is not limited thereto, and may be implemented for a plurality of external storage media (e.g., two or three external storage media), although not shown separately.

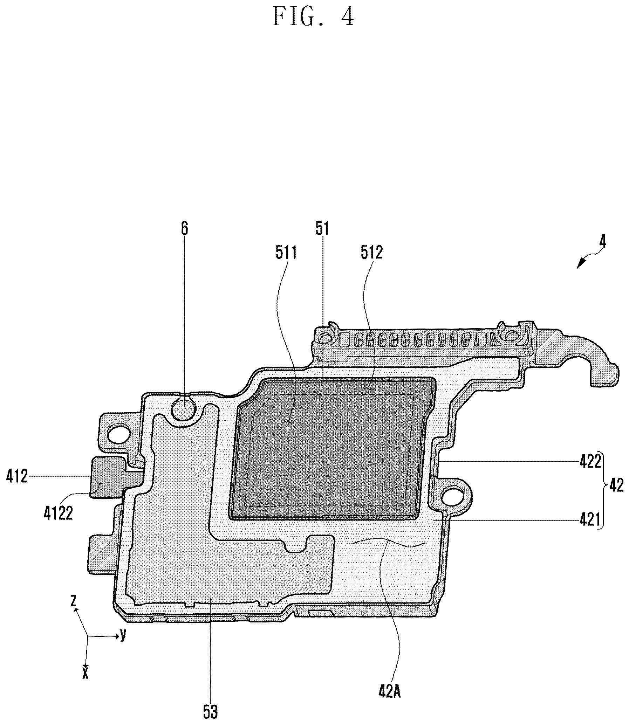

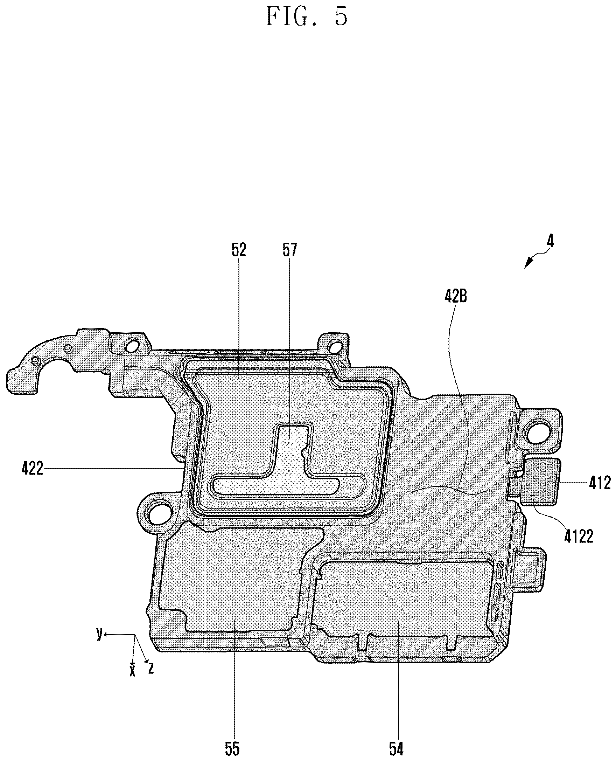

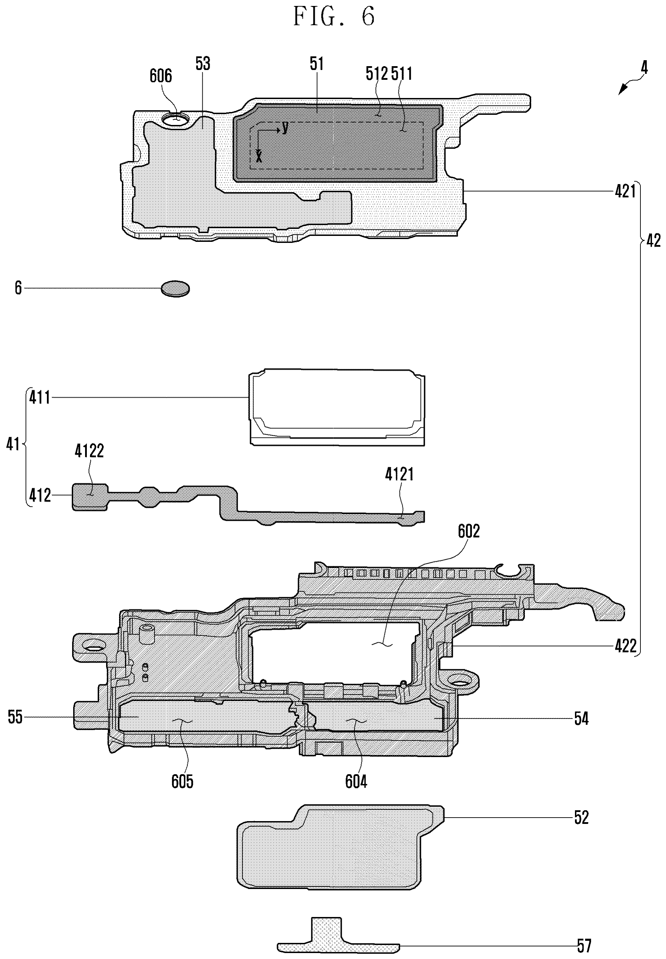

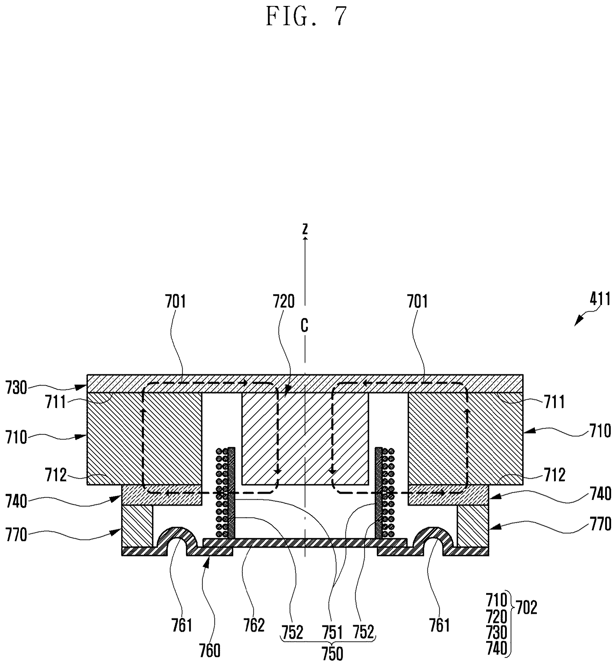

FIG. 3 illustrates a perspective view of a portion of an example electronic device 2 and a cross-sectional view of a display module 201, according to an embodiment of the disclosure. FIGS. 4 and 5 are perspective views of a first speaker assembly 4, according to an embodiment of the disclosure. FIG. 6 is an exploded perspective view of a first speaker assembly 4, according to an embodiment of the disclosure. FIG. 7 is a cross-sectional view of a first speaker 411, according to an embodiment of the disclosure. It should be understood that the disclosure encompasses and includes all combinations of the features and/or embodiments disclosed with respect to FIGS. 3, 4, 5, 6, and 7. That is, all combinations of the features described below with respect to FIGS. 3, 4, 5, 6, and 7 should be considered to be included in the disclosure as specific examples.

Referring to FIGS. 3, 4, 5, 6, and 7, the electronic device 2 may include a frame 22, a display module 201, a first speaker assembly 4, and/or an adhesive material 57 (or bonding material). Among a plurality of components illustrated in FIG. 3, at least one identical component that has been described with reference to FIG. 2 will not be described herein.

According to an embodiment, the frame 22 may include a first speaker hole SH1 provided (or formed) in the second lateral portion 242. The first speaker hole SH1 may include, for example, a plurality of holes. The plurality of holes included in the first speaker hole SH1 may be arranged, for example, in a first direction (e.g., the +y-axis direction).

According to an embodiment, the frame 22 may include a first key hole KH1 provided (or formed) in the first lateral portion 241. The first key K1 (see FIG. 2) may be positioned in the first key hole KH1.

According to an embodiment, the display module 201 may be positioned in a space between the front plate 21 (see FIG. 2) and the frame 22. The display module 201 may be combined with the front plate 21 (see FIG. 2) via an optically transparent adhesive layer (or optically transparent bonding layer) (not shown separately). The optically transparent adhesive layer may include, for example, an optically transparent adhesive material such as an optical clear adhesive (OCA), an optical clear resin (OCR), or a super view resin (SVR).

According to an embodiment, the display module 201 may include a display panel 301, a base film 302, a lower panel 303, an optical layer 304, and/or an electromagnetic induction panel 305.

According to an embodiment, the display panel 301 may be positioned between the optical layer 304 and the base film 302. The base film 302 may be positioned between the display panel 301 and the lower panel 303. The optical layer 304 may be positioned between the optically transparent adhesive layer and the display panel 301. An adhesive layer (or bonding layer) (not shown separately) of various polymers may be positioned between the display panel 301 and the base film 302, between the base film 302 and the lower panel 303, and/or between the display panel 301 and the optical layer 304.

According to an embodiment, the display panel 301 may include a light-emitting layer 301a, a thin film transistor (TFT) film 301b (or TFT substrate), and/or an encapsulation layer 301c (e.g., thin-film encapsulation (TFE)). The light-emitting layer 301a may include a plurality of pixels implemented with light-emitting elements such as, for example, an organic light emitting diode (OLED) or a micro LED. The light-emitting layer 301a may be disposed on the TFT film 301b through organic evaporation. The TFT film 301b may be positioned between the light-emitting layer 301a and the base film 302. The TFT film 301b may refer to a film structure in which at least one TFT is disposed on a flexible substrate (e.g., a PI film) through a series of processes such as deposition, patterning, and/or etching. The at least one TFT may control current for a light-emitting element of the light-emitting layer 301a to turn a pixel on or off, or adjust the brightness of the pixel. The at least one TFT may be implemented as, for example, an amorphous silicon (a-Si) TFT, a liquid crystalline polymer (LCP) TFT, a low-temperature polycrystalline oxide (LTPO) TFT, or a low-temperature polycrystalline silicon (LTPS) TFT.

According to an embodiment, the display panel 301 may include a storage capacitor, and the storage capacitor may maintain a voltage signal to a pixel, maintain a voltage applied to the pixel within one frame, or reduce a change in the gate voltage of a TFT due to leakage current during the light emission time. By a routine (e.g., initialization, data write) for controlling the at least one TFT, the storage capacitor may maintain the voltage applied to the pixel at a predetermined time interval.

According to an embodiment, the display panel 301 may be implemented based on an OLED, and the encapsulation layer 301c may cover the light-emitting layer 301a. Since the organic material and electrodes that produce light in the OLED are very sensitive to oxygen and/or moisture and may lose their light-emitting properties, the encapsulation layer 301c may seal the light-emitting layer 301a to prevent oxygen and/or moisture from penetrating into the OLED to reduce or prevent this. The encapsulation layer 301c may serve as a pixel protection layer for protecting a plurality of pixels of the light-emitting layer 301a.

According to an embodiment, the base film 302 may serve to support and protect the display panel 301. If the display module 201 is implemented to be substantially rigid, the base film 302 may include a substantially rigid film (or substrate) (e.g., a glass substrate). If the display module 201 is implemented to be flexible, the base film 302 may include a flexible film (or substrate) formed of a polymer or plastic, such as polyimide or polyester (PET). The base film 302 may be referred to as a 'protective film', a 'back film', or a 'back plate'.

According to an embodiment, the lower panel 303 may include a plurality of layers for various functions. An adhesive layer (or bonding layer) (not shown separately) of a variety of polymers may be disposed between the plurality of layers included in the lower panel 303. The lower panel 303 may include, for example, a light-shielding layer 303a, a buffer layer 303b, and/or a lower layer 303c. The light-shielding layer 303a may be positioned between the base film 302 and the buffer layer 303b. The buffer layer 303b may be positioned between the light-shielding layer 303a and the lower layer 303c. The light-shielding layer 303a may block at least in part light incident from the outside. The light-shielding layer 303a may include, for example, an embossed layer. The embossed layer may be, for example, a black layer including an uneven pattern. The buffer layer 303b may, for example, cushion external impact applied to the display module 201. The buffer layer 303b may include, for example, a sponge layer or a cushion layer. The lower layer 303c may dissipate, disperse, or radiate heat generated from the electronic device 2 or the display module 201. The lower layer 303c may absorb or shield electromagnetic waves. The lower layer 303c may mitigate external impact applied to the electronic device 2 or the display module 201.

According to an embodiment, the lower layer 303c may include a composite sheet 303d and/or a copper sheet 303e. The composite sheet 303d may be a sheet processed by combining layers or sheets having different properties. For example, the composite sheet 303d may include at least one of polyimide and graphite. The composite sheet 303d may also be replaced with a single sheet having one material (e.g., polyimide or graphite). The composite sheet 303d may be positioned between the buffer layer 303b and the copper sheet 303e. The copper sheet 303e may be replaced with various other metal sheets.

According to various embodiments, at least a portion of the lower layer 303c may include a conductive member (e.g., a metal plate). The conductive member of the lower layer 303c may help reinforce the rigidity of the electronic device 2. The conductive member of the lower layer 303c may shield ambient noise. The conductive member of the lower layer 303c may be used to disperse heat emitted from surrounding heat-generating components (e.g., a display drive integrated circuit (DDI)). The conductive member of the lower layer 303c may include, for example, at least one of copper (Cu), aluminum (Al), stainless steel (SUS), or CLAD (e.g., a laminated member in which SUS and Al are alternately arranged).

According to various embodiments, the lower layer 303c may include various layers (not shown separately) for various other functions. In various embodiments, at least one additional polymer layer (e.g., a layer including PI, PET, or TPU) (not shown separately) may be disposed on the rear surface of the display panel 301 in addition to the base film 302.

According to various embodiments, at least one of the plurality of layers (e.g., the light-shielding layer 303a, the buffer layer 303b, the composite sheet 303d, and the copper sheet 303e) included in the lower panel 303 may be omitted.

According to various embodiments, the arrangement order of the plurality of layers included in the lower panel 303 is not limited to the illustrated embodiment and may be varied.

According to an embodiment, the optical layer 304 may include, for example, a polarization layer (or polarizing layer or polarizer) or a phase retardation layer (or retarder). An optically transparent adhesive layer (not shown separately) may be disposed between the front plate 21 and the optical layer 304. The polarization layer and the phase retardation layer may improve the outdoor visibility of the screen. The optical layer 304 may, for example, selectively pass light that is generated from a light source of the display panel 301 and vibrates in a certain direction. In various embodiments, a single layer combining the polarization layer and the phase retardation layer may be provided, and such a layer may be defined or interpreted as a 'circular polarization layer'.

According to various embodiments, the polarization layer (or circular polarization layer) may be omitted, in which case a black pixel define layer (PDL) and/or a color filter may be provided in place of the polarization layer.

According to an embodiment, the electronic device 2 may include a touch detection circuit (e.g., a touch sensor) (not shown separately). The touch detection circuit may be implemented as a transparent conductive layer (or film) based on various conductive materials such as indium tin oxide (ITO). The touch detection circuit may be, for example, of an add-on type and disposed between a transparent cover (e.g., the front plate 21 in FIG. 2) and the optical layer 304. The touch detection circuit may be, for example, of an on-cell type and disposed between the optical layer 304 and the display panel 301. For example, the display panel 301 may be of an in-cell type and include a touch sensing circuit or a touch sensing function.

According to an embodiment, the display panel 301 may be based on OLED, and the encapsulation layer 301 c of the display panel 301 may be disposed between the light-emitting layer 301a and the optical layer 304. For example, the display module 201 may include a conductive pattern (not shown separately) such as a metal mesh (e.g., an aluminum metal mesh) as a touch sensing circuit disposed on the encapsulation layer 301c between the encapsulation layer 301c and the optical layer 304. In response to bending of the display module 201, the metal mesh may have greater durability than a transparent conductive layer implemented with ITO.

According to an embodiment, the electromagnetic induction panel 305 may be disposed between the composite sheet 303d and the copper sheet 303e in the lower layer 303c.

According to various embodiments, although not shown separately, the electromagnetic induction panel 305 may be disposed between the buffer layer 303b and the lower layer 303c.

According to various embodiments, although not shown separately, the electromagnetic induction panel 305 may be disposed between the light-shielding layer 303a and the buffer layer 303b.

According to an embodiment, the electromagnetic induction panel 305 may be implemented in the form of a flexible film or sheet. The electromagnetic induction panel 305 may be implemented, for example, as a flexible printed circuit board (not shown separately).

According to an embodiment, the electromagnetic induction panel 305 may include a digitizer (not shown separately) that detects a magnetic field-type pen input device 207 (see FIG. 2).

According to an embodiment, the electromagnetic induction panel 305 may be defined or interpreted as a component included in the display module 201 or as a separate component arranged in the display module 201.

According to an embodiment, the electromagnetic induction panel 305 may include a plurality of electrode patterns. When an alternating current is supplied to the electromagnetic induction panel 305, an electromagnetic field may be formed by the plurality of electrode patterns. When the pen tip of the pen input device 207 (see FIG. 2) is brought close to the front surface 20A (see FIG. 2) of the electronic device 2, a current may flow through the coil included in the pen input device 207 by electromagnetic induction. The pen input device 207 may generate a signal (e.g., a radio frequency signal) (e.g., a position signal, a pressure signal, and/or an angle signal) regarding a user input using energy supplied from the electromagnetic induction panel 305 and transmit the signal to the electromagnetic induction panel 305.

According to an embodiment, the electromagnetic induction panel 305 may include a shielding sheet (not shown separately). The electromagnetic induction panel 305 may be positioned on a flexible printed circuit board (not shown separately) including a plurality of electrode patterns or on a rear surface of the flexible printed circuit board (e.g., a surface of the flexible printed circuit board facing the copper sheet 303e). The shielding sheet may reduce or prevent the electromagnetic influence that the electrical components included in the electronic device 2 exert on the electromagnetic induction panel 305. The shielding sheet may reduce or shield the influence that the electromagnetic fields generated from the electrical components included in the electronic device 2 exert on the electromagnetic induction panel 305, thereby reducing or preventing loss or deformation of an input transmitted from the pen input device 207 (see FIG. 2) to the electromagnetic induction panel 305.

According to various embodiments, although not shown separately, the plurality of layers included in the display module 201, their stacking structure, or stacking order may be varied. Although not shown separately, the display module 201 may be implemented by omitting some of its components or adding other components, depending on its provision form or convergence trends.

According to an embodiment, the first speaker assembly 4 may be positioned in a space between the front plate 21 (see FIG. 2) and the frame 22. The first speaker assembly 4 may be disposed on or combined with the frame 22.

According to various embodiments, the electronic device 2 may include an inner support (or support member, support, or support portion) (e.g., a bracket) (not shown separately) positioned at least partially between the rear portion 23 of the frame 22 and the display module 201. The inner support may be connected to the rear portion 23 and/or the lateral portion 24 of the frame 22. The inner support may include at least one conductive portion and/or at least one non-conductive portion. The inner support may be provided (or formed) as, for example, a combination of at least one conductive portion and at least one non-conductive portion. In various embodiments, the inner support may be interpreted as a part of the frame 22. Some (e.g., the display module 201) of the plurality of electrical components included in the electronic device 2 may be disposed on, combined with, or supported by the inner support between the front plate 21 and the inner support. Other some (e.g., a printed circuit board) of the plurality of electrical components included in the electronic device 2 may be disposed on, combined with, or supported by the inner support between the rear portion 23 of the frame 22 and the inner support. The first speaker assembly 4 may be, for example, disposed on or combined with the inner support between the display module 201 and the inner support.

According to an embodiment, at least a portion of the first speaker assembly 4 may be positioned between the display module 201 and the rear portion 23 of the frame 22.

According to an embodiment, the first speaker assembly 4 may include a first speaker module 41, a first speaker housing 42, a first metal plate 51, a second metal plate 52, a third metal plate 53, a fourth metal plate 54, a fifth metal plate 55, and/or a first air permeable member 6 (or first air permeable material).

According to an embodiment, the first speaker module 41 may include a first speaker 411 and a first electrical connection member 412 (or electrical connector).

According to an embodiment, the first speaker 411 may include a magnet 710, a center pole 720, a first plate 730, a second plate 740, a coil structure 750, a diaphragm 760, and/or a support member 770.

According to an embodiment, the magnet 710 may include a permanent magnet related to the magnetic field strength of the first speaker 411. The magnet 710 may be various, such as, for example, a neodymium magnet, an alnico magnet, or a ferrite magnet. The magnet 710 may have an annular shape (or loop shape) surrounding the center pole 720, and may have, for example, a square annular shape (or square loop shape) or a circular annular shape (or circular loop shape). The center pole 720 may be in the form of a column positioned inside the magnet 710 and may be positioned apart from the magnet 710. The center pole 720 may have, for example, a lateral surface (e.g., a surface facing the inner surface of the magnet 710) corresponding to the annular-shaped magnet 710. For example, if the magnet 710 has a square annular shape, the center pole 720 may have a column shape including four lateral surfaces.

According to an embodiment, the magnet 710 and the center pole 720 may be arranged on the first plate 730.

According to an embodiment, the magnet 710 may include a first support surface 711 combined with the first plate 730 and a second support surface 712 positioned opposite the first support surface 711. For example, if the magnet 710 has a square annular shape (or square loop shape), the first support surface 711 and the second support surface 712 may be surfaces having the square annular shape (or square loop shape). For example, if the magnet 710 has a circular annular shape (or circular loop shape), the first support surface 711 and the second support surface 712 may be surfaces having the circular annular shape (or circular loop shape).

According to an embodiment, the second plate 740 may be disposed on the second support surface 712 of the magnet 710. The second plate 740 may have, for example, an annular shape (or loop shape) corresponding to the magnet 710 having an annular shape (or loop shape).

According to an embodiment, the first plate 730 and the second plate 740 may include a magnetic material that facilitates the passage of magnetic force (e.g., a material that is magnetized in a magnetic field).

According to an embodiment, the center pole 720 may include a magnetic material. The center pole 720 may be connected to the second plate 740 or may be formed integrally with the second plate 740. In various embodiments, the center pole 720 may be defined or interpreted as a protrusion relative to the first plate 730.

According to an embodiment, the coil structure 750 may include a coil support member 751 and a coil 752. The coil support member 751 may be in a form extending into an annular (or loop-shaped) space between the magnet 710 and the center pole 720, and the coil 752 may be formed by winding a metal wire around the coil support member 751. In various embodiments, the coil support member 751 may be referred to as a coil former.

According to an embodiment, the coil support member 751 may be connected to the diaphragm 760 (e.g., a cone-shaped diaphragm or a dome-shaped diaphragm). Due to the magnetic force generated from the magnet 710, a magnetic path (e.g., a magnetic force line path or a magnetic flux path) may be formed along the magnet 710, the second plate 740, the center pole 720, and the first plate 730, as indicated by reference numeral '701'. The sound may be generated due to the vibration of the diaphragm 760 caused by the interaction between a space (e.g., a magnetic field) where the magnetic force of the magnet 710 acts and the coil structure 750. The magnetic field formed in the first speaker 411 by the magnetic force of the magnet 710 may be defined or interpreted as a fixed magnetic field (or a permanent magnetic field). The coil 752 supported on the coil support member 751 may be positioned in a gap (e.g., a magnetic gap) between the magnet 710 and the center pole 720 or between the center pole 720 and the second plate 740. When an audio signal flows through the coil 752 in the form of a current (e.g., an alternating current), magnetic lines of force may be generated that are induced toward a central axis C around which the coil 752 is wound (e.g., a central axis substantially parallel to the +z axis). Due to the interaction (e.g., Fleming's left-hand rule) between the induced magnetic force and the fixed magnetic field, the coil structure 750 may move in the direction of the central axis C. The diaphragm 760 connected to the coil structure 750 may vibrate air due to the movement of the coil structure 750, thereby generating sound.

According to an embodiment, the first plate 730, the second plate 740, and/or the center pole 720 may contribute to forming a desired magnetic field distribution. In various embodiments, the first plate 730, the second plate 740, or the center pole 720 may be referred to as a yoke as a component that contributes to forming the magnetic path 701.

According to an embodiment, the first plate 730, the second plate 740, and/or the center pole 720 may reduce residual magnetism. In various embodiments, it may be referred to as a magnetic circuit unit 702, including the magnet 710, the center pole 720, the first plate 730, and the second plate 740. The magnetic circuit unit 702 may form a fixed magnetic field and generate force when the first speaker 411 operates.

According to various embodiments, the center pole 720 may include a magnet (e.g., a pole piece). For example, the center pole 720 may include a magnet and a magnetic material combined with the magnet. The magnetic material of the center pole 720 may be connected to the first plate 730 or may be formed integrally with the first plate 730.

According to various embodiments, the center pole 720 may be implemented as a magnet without a magnetic material. The fixed magnetic field of the first speaker 411 may be formed at least in part by the magnet 710 and the magnet of the center pole 720.

According to an embodiment, the support member 770 (or support structure, support body, or support) may connect the diaphragm 760 and the magnetic circuit unit 702. For example, the support member 770 may support the diaphragm 760 between the edge of the diaphragm 760 and the magnetic circuit unit 702 (or the second plate 740). An adhesive material (or bonding material) of various polymers may be disposed between the support member 770 and the diaphragm 760 or between the support member 770 and the magnetic circuit unit 702.

According to an embodiment, the support member 770 may include an unmagnetized material for reducing the influence on the fixed magnetic field of the first speaker 411. The support member 770 may include various materials, such as an amorphous metal (e.g., an amorphous ribbon), polycarbonate (PC), or epoxy.

According to an embodiment, the diaphragm 760 may include a surround 761 (or edge) that expands the vibration area and contributes to efficient air vibration. The surround 761 has a shape that facilitates the vibration of the diaphragm 760, and it may be formed adjacent to and along the edge of the diaphragm 760.

According to an embodiment, the diaphragm 760 may include a center cap 762 positioned corresponding to the coil structure 750. The center cap 762 may affect the directionality of sound waves. The center cap 762 may serve to prevent external foreign substances, such as dust or moisture, from entering the interior of the coil structure 750 and may be referred to as a 'dust cap'.

According to various embodiments, the diaphragm 760 may be implemented as an integral form including the surround 761 and the center cap 762. For example, the surround 761 and the center cap 762 may be formed integrally.

According to an embodiment, the first speaker 411 may include an elastic structure (e.g., a spider) (not shown separately) for applying elasticity to restore the coil structure 750 to its original position.

According to various embodiments, the first speaker 411 may include a buffer structure (e.g., a suspension or a damper) (not shown separately) for supporting the load of the coil structure 750 and alleviating shock generated during the operation of the first speaker 411.

According to various embodiments, although not shown separately, the first speaker 411 may be implemented by omitting some of the aforementioned components included therein or adding other components. In addition to the embodiment disclosed herein, the first speaker 411 may be provided in a modified or altered form, which may be interpreted as being included within the scope of various embodiments of the disclosure.

According to an embodiment, the first plate 730 of the first speaker 411 may face the display module 201, and the diaphragm 760 of the first speaker 411 may face the rear portion 23 of the frame 22. The first plate 730 may be positioned between the display module 201 and the diaphragm 760. The diaphragm 760 may be positioned between the first plate 730 and the rear portion 23 of the frame 22.

According to an embodiment, the first electrical connection member 412 of the first speaker module 41 may be electrically connected to the first speaker 411. The first electrical connection member 412 may extend from a first end 4121 to a second end 4122. The first end 4121 of the first electrical connection member 412 may be connected to the first speaker 411. The first end 4121 of the first electrical connection member 412 may be electrically connected to the coil 752 of the first speaker 411. A connector (not shown separately) may be disposed at the second end 4122 of the first electrical connection member 412. The connector may be electrically connected to a printed circuit board (not shown separately) located at least in part between the display module 201 and the rear portion 23 of the frame 22. A processor (e.g., the processor 120 in FIG. 1) that provides an electrical signal to the first speaker 411 may be disposed on the printed circuit board.

According to an embodiment, the first electrical connection member 412 may include a first flexible printed circuit board.

According to an embodiment, the first speaker housing 42 may provide (or form) at least in part the appearance of the first speaker assembly 4.

According to an embodiment, the first speaker housing 42 may be disposed on or combined with the frame 22. The first speaker housing 42 may be combined with the frame 22 via, for example, an adhesive material 57 (or bonding material). The adhesive material 57 may include, for example, a double-sided tape.

According to an embodiment, the first speaker housing 42 may be combined with the frame 22 through a mechanical fastening, such as a screw engagement (not shown separately).

According to an embodiment, the first speaker 411 of the first speaker module 41 may be accommodated in the first speaker housing 42.

According to an embodiment, the first electrical connection member 412 of the first speaker module 41 may penetrate the first speaker housing 42. A portion of the first electrical connection member 412, including a connector (not shown separately), may be positioned outside the first speaker housing 42. The first speaker housing 42 may include a through hole (not shown separately) through which the first electrical connection member 412 may pass and be positioned.

According to an embodiment, the first speaker housing 42 may include a first housing 421 and a second housing 422. The first speaker housing 42 may have an internal space through a combination of the first housing 421 and the second housing 422. The first housing 421 and the second housing 422 may be combined with each other, for example, through screw engagement (not shown separately). The first housing 421 and the second housing 422 may be combined with each other, for example, through an adhesive material (or bonding material) (not shown separately).

According to an embodiment, the first speaker housing 42 may include a front surface 42A and a rear surface 42B. The front surface 42A and/or the rear surface 42B of the first speaker housing 42 may be provided (or formed) by a combination of the first housing 421 and the second housing 422. The front surface 42A and/or the rear surface 42B of the first speaker housing 42 may include, for example, a combination of surface areas of different heights.

According to an embodiment, the front surface 42A of the first speaker housing 42 may substantially face the front plate 21. The rear surface 42B of the first speaker housing 42 may substantially face the rear portion 23 of the frame 22.

According to an embodiment, the first housing 421 of the first speaker housing 42 may provide (or form) a larger portion of the front surface 42A of the first speaker housing 42 than the second housing 422 of the first speaker housing 42.

According to an embodiment, the second housing 422 of the first speaker housing 42 may provide (or form) a larger portion of the rear surface 42B of the first speaker housing 42 than the first housing 421 of the first speaker housing 42.

According to an embodiment, the first housing 421 and/or the second housing 422 of the first speaker housing 42 may include a non-metallic material (e.g., a polymer).

According to various embodiments, the first housing 421 and/or the second housing 422 may be provided (or formed) by a combination of at least one non-conductive portion (not shown separately) of a non-metallic material and at least one conductive portion (not shown separately) of a metallic material.

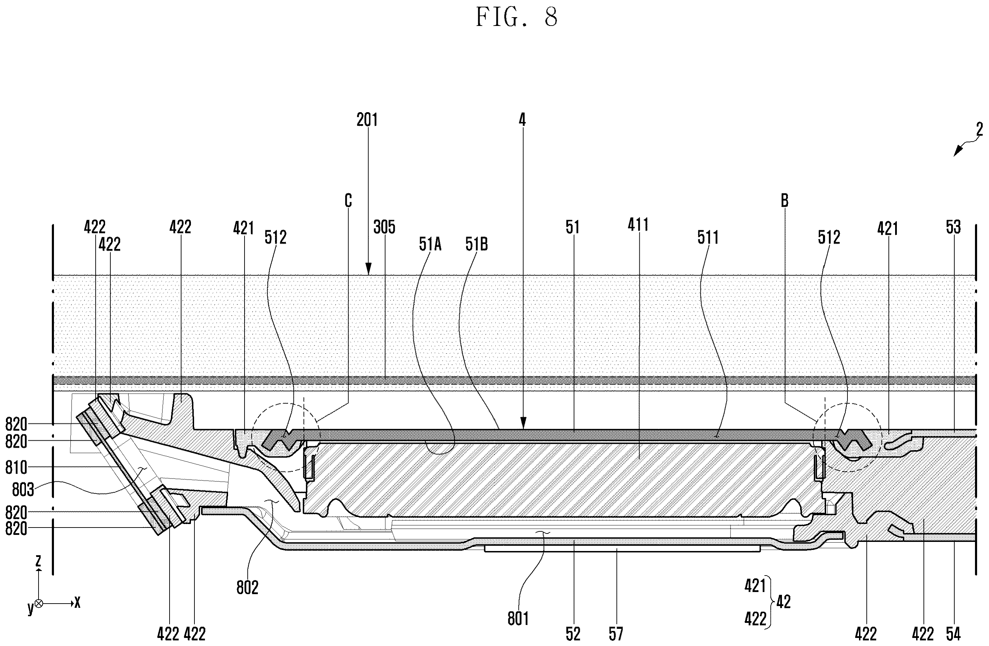

According to an embodiment, the first speaker housing 42 may include a sound output hole 803 (or sound emission hole) (see FIG. 8). The sound generated by the first speaker 411 may be output to the outside of the first speaker housing 42 through the sound output hole 803 (see FIG. 8). The sound output hole 803 (see FIG. 8) may be provided (or formed) on, for example, a side surface of the first speaker housing 42 (e.g., a side surface connecting the front surface 42A and the rear surface 42B). The sound output hole 803 (see FIG. 8) of the first speaker housing 42 may be arranged to correspond to the first speaker hole SH1 of the frame 22 and connected to the first speaker hole SH1. The sound generated by the first speaker 411 may be output to the outside of the electronic device 2 through the sound output hole 803 and the first speaker hole SH1.

According to an embodiment, the sound output hole 803 (see FIG. 8) may be formed in the second housing 422 of the first speaker housing 42. Although not shown separately, the sound output hole 803 (see FIG. 8) may be formed in the first housing 421 of the first speaker housing 42. Although not shown separately, the sound output hole 803 (see FIG. 8) may be provided (or formed) by a combination of the first housing 421 and the second housing 422 of the first speaker housing 42.

According to an embodiment, the first speaker housing 42 may include a second internal space 802 (see FIG. 8) extending from the sound output hole 803 (see FIG. 8) to the first speaker 411. The second internal space 802 (see FIG. 8) may include a passage that guides sound generated from the first speaker 411 to the sound output hole 803 (see FIG. 8) of the first speaker housing 42. The second internal space 802 (see FIG. 8) may be provided (or formed) at least in part by, for example, a combination of the second housing 422 and the second metal plate 52. The sound generated from the first speaker 411 by vibrating the diaphragm 760 may be guided by the second internal space 802 (see FIG. 8) and output to the outside of the electronic device 2 through the sound output hole 803 (see FIG. 8) of the first speaker housing 42 and the first speaker hole SH1 of the frame 22.

According to an embodiment, the first plate 730 of the first speaker 411 may face the front surface 42A of the first speaker housing 42, and the diaphragm 760 of the first speaker 411 may face the rear surface 42B of the first speaker housing 42.

According to an embodiment, the first metal plate 51 may be disposed on or combined with the first speaker housing 42. The first metal plate 51 may be combined with the first speaker housing 42 through an adhesive material (or bonding material) (not shown separately) disposed between the first metal plate 51 and the first speaker housing 42.

According to various embodiments, the first metal plate 51 may be disposed on or combined with the first speaker housing 42 through a mechanical fastening, such as a screw engagement (not shown separately).

According to an embodiment, the first metal plate 51 may be disposed on or combined with the front surface 42A of the first speaker housing 42.

According to an embodiment, the first speaker housing 42 may include a first recess (not shown separately) in which the first metal plate 51 is placed. The first recess may be provided (or formed) in a shape allowing the first metal plate 51 to be fitted so that the first metal plate 51 can be stably placed in the first speaker housing 42. The first recess may contribute to the slimming, i.e., reducing the thickness, of the first speaker assembly 4.

According to an embodiment, the first metal plate 51 may be disposed at least in part between the display module 201 and the first speaker 411. When viewed from above the front surface 20A of the electronic device 2 (see FIG. 2), the first metal plate 51 may overlap with the first speaker 411.

According to an embodiment, the first speaker housing 42 (or the first housing 421) may include a first opening (not shown separately) between the first metal plate 51 and the first speaker 411. The first opening may contribute to the slimming, i.e., reducing the thickness, of the first speaker assembly 4.

According to an embodiment, the first metal plate 51 may block the first opening (not shown separately) of the first speaker housing 42. The first metal plate 51 may reduce or prevent sound generated from the first speaker 411 from leaking out of the first speaker housing 42 through the first opening. The first metal plate 51 may also reduce or prevent external foreign substances, such as dust or moisture, from entering the internal space of the first speaker housing 42 through the first opening.

According to various embodiments, the first opening (not shown separately) of the first speaker housing 42 may be omitted.

According to an embodiment, the first metal plate 51 may reduce or prevent electromagnetic interference (EMI) to the first speaker 411. The first metal plate 51 may reduce or prevent the magnetic force from the first speaker 411 from being transmitted or transferred to the outside of the first speaker assembly 4. The first metal plate 51 may include an electromagnetic shielding material or an electromagnetic absorbing material.

According to an embodiment, the first metal plate 51 may reduce or prevent the electromagnetic influence (e.g., EMI) that the first speaker 411 exerts on the display module 201. The first metal plate 51 may reduce or prevent the performance of the display module 201 from being degraded due to the first speaker 411. The first metal plate 51 may reduce or prevent the magnetic force of the first speaker 411 from being transmitted or transferred to the display module 201.

According to an embodiment, the first metal plate 51 may be disposed at least in part between the electromagnetic induction panel 305 and the first speaker 411 included or arranged in the display module 201. When viewed from above the front surface 20A of the electronic device 2 (see FIG. 2), the first metal plate 51 may overlap with the electromagnetic induction panel 305 and the first speaker 411.

According to an embodiment, the first metal plate 51 may reduce or prevent the electromagnetic influence (e.g., EMI) that the first speaker 411 exerts on the electromagnetic induction panel 305 included or arranged in the display module 201. The first metal plate 51 may reduce or prevent the performance of the electromagnetic induction panel 305 from being degraded due to the first speaker 411. The first metal plate 51 may reduce or prevent the magnetic force of the first speaker 411 from being transmitted or transferred to the electromagnetic induction panel 305.

According to an embodiment, the first metal plate 51 may include various metallic materials capable of shielding magnetic force. For example, the first metal plate 51 may include, but is not limited to, steel plate cold commercial (SPCC).

According to an embodiment, the first metal plate 51 may include a metallic material having superior magnetic shielding properties than the second metal plate 52, the third metal plate 53, the fourth metal plate 54, and/or the fifth metal plate 55.

According to an embodiment, the first metal plate 51 may be in an electrically floating state. The first metal plate 51 may be electrically and physically isolated from surrounding conductors, such as, for example, the second metal plate 52, the third metal plate 53, the fourth metal plate 54, or the fifth metal plate 55.

According to an embodiment, the first metal plate 51 may include a first portion 511 and a second portion 512 extending from the first portion 511. The first portion 511 may overlap with the first speaker 411 when viewed from above the front surface 20A of the electronic device 2 (see FIG. 2). The second portion 512 may surround at least in part the first portion 511 when viewed from above the front surface 20A of the electronic device 2 (see FIG. 2). The second portion 512 may not overlap with the first speaker 411 when viewed from above the front surface 20A of the electronic device 2.

According to an embodiment, the first portion 511 of the first metal plate 51 may be implemented to be substantially flat, but is not limited thereto.

According to an embodiment, the first portion 511 of the first metal plate 51 may have a substantially constant thickness overall, but is not limited thereto.

According to an embodiment, the second portion 512 of the first metal plate 51 may be arranged in a looped shape surrounding the first portion 511 of the first metal plate 51 when viewed from above the front surface 20A of the electronic device 2 (see FIG. 2).

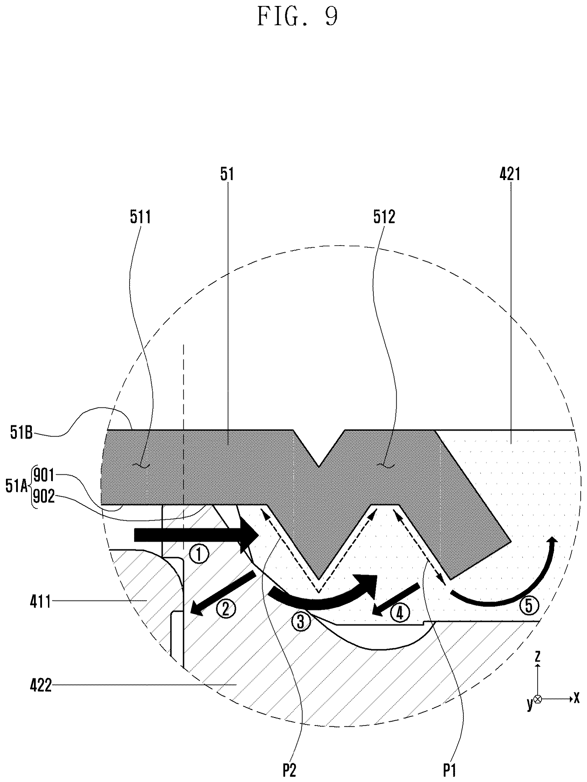

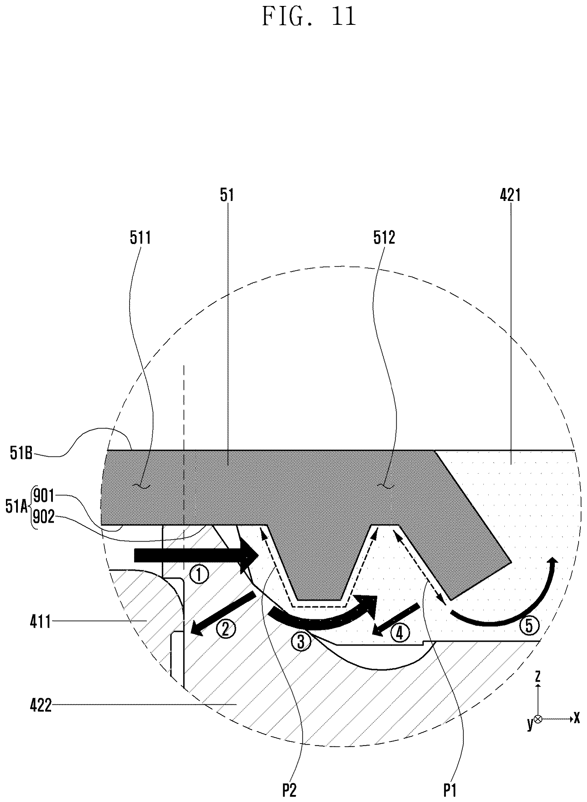

According to an embodiment, the second portion 512 of the first metal plate 51 may include a plurality of protrusions (e.g., a first protrusion P1 and a second protrusion P2 in FIG. 9, or a first protrusion P1 or a second protrusion P2 in FIG. 11) protruding toward the rear portion 23 of the frame 22. The plurality of protrusions may further reduce the magnetic force of the first speaker 411 from being transmitted or transferred (e.g., leaking) to the display module 201 and/or the electromagnetic induction panel 305 compared to a comparative example (not shown) in which at least one protrusion is omitted.

According to an embodiment, the second metal plate 52, the third metal plate 53, the fourth metal plate 54, and/or the fifth metal plate 55 may be disposed on or combined with the first speaker housing 42. The second metal plate 52, the third metal plate 53, the fourth metal plate 54, and/or the fifth metal plate 55 may be combined with the first speaker housing 42 via, for example, an adhesive material (or bonding material). The second metal plate 52, the third metal plate 53, the fourth metal plate 54, and/or the fifth metal plate 55 may be combined with the first speaker housing 42 via, for example, a mechanical fastening such as a screw engagement (not shown separately).

According to an embodiment, the second metal plate 52 may be disposed on or combined with the rear surface 42B of the first speaker housing 42. The second metal plate 52 may be, for example, disposed on or combined with the second housing 422.

According to an embodiment, the first speaker housing 42 may include a second recess (not shown separately) in which the second metal plate 52 is disposed. The second recess may be provided (or formed) in a shape allowing the second metal plate 52 to be fitted so that the second metal plate 52 can be stably disposed in the first speaker housing 42. The second recess may contribute to the slimming, i.e., reducing the thickness, of the first speaker assembly 4.

According to an embodiment, the first speaker housing 42 may be combined with the frame 22 via an adhesive material 57 (or bonding material) disposed between the second metal plate 52 and the rear portion 23 of the frame 22.

According to an embodiment, the second metal plate 52 may overlap with the first metal plate 51 when viewed from above the front surface 20A (see FIG. 2) or the rear surface 20B (see FIG. 2) of the electronic device 2.

According to an embodiment, the first speaker 411 may be positioned between the first metal plate 51 and the second metal plate 52.

According to an embodiment, the first speaker assembly 4 may include a first internal space 801 (see FIG. 8) facing the diaphragm 760 of the first speaker 411. The first internal space 801 (see FIG. 8) may be provided (or formed) by, for example, a combination of the second metal plate 52 and the second housing 422. The first internal space 801 (see FIG. 8) may be connected to the second internal space 802 (e.g., passage) (see FIG. 8). The sound generated from the first speaker 411 due to the vibration of the diaphragm 760 may be transferred from the first internal space 801 (see FIG. 8) to the second internal space 802 and be output to the outside of the electronic device 2 through the sound output hole 803 (see FIG. 8) of the first speaker housing 42 and the first speaker hole SH1 of the frame 22. The remaining portion of the first internal space 801 (see FIG. 8) excluding the portion connected to the second internal space 802 (see FIG. 8) may be sealed to substantially prevent sound leakage.

According to an embodiment, the first speaker assembly 4 may include an elastic body (or elastic member) (e.g., a seal part or a seal member) (not shown separately) such as rubber that is elastically disposed between the first housing 421 and the second housing 422. The elastic body may improve sealing properties for the remaining portion of the first internal space 801 (see FIG. 8) between the first speaker 411 and the second metal plate 52 except for a portion connected to the second internal space 802 (e.g., a passage) (see FIG. 8).

According to an embodiment, the first speaker housing 42 (or the first housing 421) may include a second opening 602 that overlaps with the second metal plate 52 when viewed from above the rear surface 20B of the electronic device 2 (see FIG. 2). The second opening 602 may contribute to the slimming, i.e., reducing the thickness, of the first speaker assembly 4.

According to various embodiments, although not shown separately, the second opening 602 of the first speaker housing 42 may be omitted.

According to an embodiment, the second metal plate 52 may reduce or prevent electromagnetic interference (EMI) to the first speaker 411. The second metal plate 52 may reduce or prevent the magnetic force from the first speaker 411 from being transmitted or transferred to the outside of the first speaker assembly 4. The second metal plate 52 may include an electromagnetic shielding material or an electromagnetic absorbing material.

According to an embodiment, the second metal plate 52 may reduce or prevent the magnetic force of the first speaker 411 from being transmitted or transferred to the outside of the first speaker assembly 4.

According to an embodiment, the second metal plate 52 may include various metallic materials capable of shielding magnetic force. For example, the second metal plate 52 may include, but is not limited to, SPCC.

According to an embodiment, the second metal plate 52 may block the second opening 602 of the first speaker housing 42. The second metal plate 52 may reduce or prevent sound generated from the first speaker 411 from leaking out of the first speaker housing 42 through the second opening 602. The second metal plate 52 may reduce or prevent external foreign substances, such as dust or moisture, from entering the internal space of the first speaker housing 42 through the second opening 602.

According to an embodiment, the third metal plate 53 may be disposed on or combined with the front surface 42A of the first speaker housing 42. The third metal plate 53 may be disposed on or combined with, for example, the first housing 421.

According to an embodiment, the first speaker housing 42 may include a third recess (not shown separately) in which the third metal plate 53 is disposed. The third recess may be provided (or formed) in a shape allowing the third metal plate 53 to be fitted so that the third metal plate 53 can be stably disposed in the first speaker housing 42. The third recess may contribute to slimming, i.e., reducing the thickness, of the first speaker assembly 4.

According to an embodiment, the third metal plate 53 may not overlap with the first metal plate 51 and/or the second metal plate 52 when viewed from above the front surface 20A of the electronic device 2 (see FIG. 2).

According to an embodiment, the first speaker housing 42 (or the first housing 421) may include a third opening (not shown separately) overlapping with the third metal plate 53 when viewed from above the front surface 20A of the electronic device 2 (see FIG. 2). The third opening may contribute to slimming, i.e., reducing the thickness, of the first speaker assembly 4.

According to an embodiment, the third metal plate 53 may block the third opening (not shown separately) of the first speaker housing 42. The third metal plate 53 may reduce or prevent external foreign substances, such as dust or moisture, from entering the internal space of the first speaker housing 42 through the third opening.

According to various embodiments, the third opening (not shown separately) of the first speaker housing 42 may be omitted.

According to an embodiment, the fourth metal plate 54 may be disposed on or combined with the rear surface 42B of the first speaker housing 42. The fourth metal plate 54 may be disposed on or combined with, for example, the second housing 422.

According to an embodiment, the first speaker housing 42 may include a fourth recess (not shown separately) in which the fourth metal plate 54 is disposed. The fourth recess may be provided (or formed) in a shape allowing the fourth metal plate 54 to be fitted so that the fourth metal plate 54 can be stably placed in the first speaker housing 42. The fourth recess may contribute to slimming, i.e., reducing the thickness, of the first speaker assembly 4.

According to an embodiment, the fourth metal plate 54 may not overlap with the first metal plate 51, the second metal plate 52, the third metal plate 53, and/or the fifth metal plate 55 when viewed from above the rear surface 20B of the electronic device 2 (see FIG. 2).

According to an embodiment, the first speaker housing 42 (or the second housing 422) may include a fourth opening 604 that overlaps with the fourth metal plate 54 when viewed from above the rear surface 20B of the electronic device 2 (see FIG. 2). The fourth opening 604 may contribute to slimming, i.e., reducing the thickness, of the first speaker assembly 4.

According to an embodiment, the fourth metal plate 54 may block the fourth opening 604 of the first speaker housing 42. The fourth metal plate 54 may reduce or prevent external foreign substances, such as dust or moisture, from entering the internal space of the first speaker housing 42 through the fourth opening 604.

According to various embodiments, although not shown separately, the fourth opening 604 of the first speaker housing 42 may be omitted.

According to an embodiment, the fifth metal plate 55 may be disposed on or combined with the rear surface 42B of the first speaker housing 42. The fifth metal plate 55 may be disposed on or combined with, for example, the second housing 422.

According to an embodiment, the first speaker housing 42 may include a fifth recess (not shown separately) in which the fifth metal plate 55 is disposed. The fifth recess may be provided (or formed) in a shape allowing the fifth metal plate 55 to be fitted so that the fifth metal plate 55 can be stably placed in the first speaker housing 42. The fifth recess may contribute to slimming, i.e., reducing the thickness, of the first speaker assembly 4.

According to an embodiment, the fifth metal plate 55 may not overlap with the first metal plate 51, the second metal plate 52, the third metal plate 53, and/or the fourth metal plate 54 when viewed from above the rear surface 20B of the electronic device 2 (see FIG. 2).

According to an embodiment, the first speaker housing 42 (or the second housing 422) may include a fifth opening 605 that overlaps with the fifth metal plate 55 when viewed from above the rear surface 20B of the electronic device 2 (see FIG. 2). The fifth opening 605 may contribute to slimming, i.e., reducing the thickness, of the first speaker assembly 4.

According to an embodiment, the fifth metal plate 55 may block the fifth opening 605 of the first speaker housing 42. The fifth metal plate 55 may reduce or prevent external foreign substances, such as dust or moisture, from entering the internal space of the first speaker housing 42 through the fifth opening 605.

According to various embodiments, although not shown separately, the fifth opening 605 of the first speaker housing 42 may be omitted.

According to an embodiment, the third metal plate 53, the fourth metal plate 54, and/or the fifth metal plate 55 may reduce or prevent electromagnetic interference (EMI) to the first speaker module 41. The third metal plate 53, the fourth metal plate 54, and/or the fifth metal plate 55 may include various electromagnetic shielding materials or electromagnetic absorbing materials.

According to an embodiment, the second metal plate 52, the third metal plate 53, the fourth metal plate 54, and/or the fifth metal plate 55 may be defined or interpreted as a part of a ground structure (not shown separately) included in the electronic device 2. The ground structure of the electronic device 2 may include, for example, a ground area (not shown separately) of a printed circuit board included in the electronic device 2, and at least one conductor (e.g., the second metal plate 52, the third metal plate 53, the fourth metal plate 54, the fifth metal plate 55, the copper sheet 303e of the display module 201, and/or various other metal bodies) electrically connected to the ground area. For example, the second metal plate 52, the third metal plate 53, the fourth metal plate 54, and/or the fifth metal plate 55 may be electrically connected, as a part of the ground structure, to the ground area of the printed circuit board. For example, a metal (not shown separately) included in the frame 22 may be electrically connected, as a part of the ground structure, to the ground area of the printed circuit board. For example, the copper sheet 303e of the display module 201 may be electrically connected, as a part of the ground structure, to the ground area of the printed circuit board. The ground structure of the electronic device 2 may reduce or prevent EMI to electrical components included in the electronic device 2. The ground structure of the electronic device 2 may reduce or prevent the electromagnetic influence that noise from outside the electronic device 2 exerts on electrical components included in the electronic device 2. The ground structure of the electronic device 2 may reduce or prevent electromagnetic interference between electrical components included in the electronic device 2.

According to an embodiment, the second metal plate 52 may be electrically connected to a metal (not shown separately) included in the frame 22 through an adhesive material 57 (or bonding material) disposed between the second metal plate 52 and the frame 22. The adhesive material 57 (or bonding material) may include a conductive material. The second metal plate 52 may be electrically connected to the ground area (not shown separately) of the printed circuit board included in the electronic device 2 through the adhesive material 57 and the metal of the frame 22.

According to various embodiments, the second metal plate 52 may be electrically connected to the metal (not shown separately) of the frame 22 via a flexible conductor (or flexible conductive portion or flexible conductive member) (not shown separately) disposed between the second metal plate 52 and the frame 22, in place of or in addition to the adhesive material 57 (or bonding material). The flexible conductor may include, for example, a conductive clip (e.g., a conductive structure including an elastic structure), a pogo-pin, a spring, a conductive poron, a conductive sponge, a conductive rubber, a conductive tape, or a conductive connector. The second metal plate 52 may be electrically connected to the ground area (not shown separately) of the printed circuit board included in the electronic device 2 via the flexible conductor and the metal of the frame 22.

According to various embodiments, although not shown separately, the second metal plate 52 may be electrically connected to the ground area (not shown separately) of the printed circuit board included in the electronic device 2, either directly without the intermediary of a metal (not shown separately) of the frame 22, or indirectly via an adhesive material or a flexible conductor (not shown separately).

According to an embodiment, the third metal plate 53, the fourth metal plate 54, and/or the fifth metal plate 55 may be electrically connected to the ground area of the printed circuit board included in the electronic device 2 in a manner substantially the same as or at least partially similar to the manner in which the second metal plate 52 is electrically connected to the ground area (not shown separately) of the printed circuit board included in the electronic device 2.

According to various embodiments, the second metal plate 52, the third metal plate 53, the fourth metal plate 54, and/or the fifth metal plate 55 may include a terminal portion (not shown separately) that extends and protrudes from its outline so as to overlap with the metal of the frame 22 (not shown separately) or face the metal of the frame 22. The second metal plate 52, the third metal plate 53, the fourth metal plate 54, and/or the fifth metal plate 55 may be electrically connected to the metal of the frame 22 through a conductive adhesive material or a flexible conductor (not shown separately) disposed between the terminal portion and the metal of the frame 22. The second metal plate 52, the third metal plate 53, the fourth metal plate 54, and/or the fifth metal plate 55 may be electrically connected to the ground area (not shown separately) of the printed circuit board included in the electronic device 2 via a conductive adhesive material or a flexible conductor, and the metal of the frame 22.

According to an embodiment, a portion of the first electrical connection member 412 may be positioned between a combination of the fourth and fifth metal plates 54 and 55 and the third metal plate 53. The third metal plate 53, the fourth metal plate 54, and/or the fifth metal plate 55 may reduce or prevent electromagnetic interference (EMI) to the first electrical connection member 412.

According to an embodiment, the second metal plate 52, the third metal plate 53, the fourth metal plate 54, and/or the fifth metal plate 55 may be formed of, but are not limited to, stainless steel.

According to various embodiments, the first speaker assembly 4 may include an integrated or single metal plate (not shown separately) in place of the fourth metal plate 54 and the fifth metal plate 55.

According to various embodiments, the first speaker assembly 4 may include an integrated or single metal plate (not shown separately) that replaces at least two of the second metal plate 52, the fourth metal plate 54, and the fifth metal plate 55.

According to various embodiments, the first metal plate 51 may be electrically connected to the ground area (not shown separately) of the printed circuit board included in the electronic device 2, and may be defined or interpreted as a part of the ground structure of the electronic device 2.

According to an embodiment, although not shown separately, the first metal plate 51 may be electrically connected to the metal of the frame 22 through a conductive adhesive material or a flexible conductor disposed between the first metal plate 51 and the frame 22. The first metal plate 51 may be electrically connected to the ground area of the printed circuit board included in the electronic device 2 through the conductive adhesive material or flexible conductor and the metal of the frame 22. Although not shown separately, the first metal plate 51 may include a terminal portion (not shown separately) that extends and protrudes from its outline so as to overlap with the metal of the frame 22 or face the metal of the frame 22. The first metal plate 51 may be electrically connected to the metal of the frame 22 through a conductive adhesive material or a flexible conductor (not shown separately) disposed between the terminal portion and the metal of the frame 22.

According to various embodiments, although not shown separately, at least two of the first metal plate 51, the second metal plate 52, the third metal plate 53, the fourth metal plate 54, and the fifth metal plate 55 may be electrically connected to each other directly or indirectly via an adhesive material or a flexible conductor.

According to an embodiment, the first air permeable member 6 may be disposed in a sixth opening 606 formed in the first speaker housing 42. The sixth opening 606 may be provided (or formed) in, for example, the first housing 421. The sixth opening 606 may be an air vent that allows air to flow between the inside of the first speaker assembly 4 and the outside of the first speaker assembly 4. The air may flow through the first air permeable member 6 disposed in the sixth opening 606. The first air permeable member 6 may reduce or prevent external foreign substances such as dust or moisture from entering the internal space of the first speaker housing 42 through the sixth opening 606. The first air permeable member 6 may include, for example, a porous member or a mesh member.

According to an embodiment, the first speaker assembly 4 may include a third internal space (not shown separately). The third internal space may be separated from the first internal space 801 (see FIG. 8) and the second internal space 802 (see FIG. 8). The third internal space may extend, for example, from a first partial space (not shown separately) between the first plate 730 of the first speaker 411 and the first metal plate 51 to a second partial space (not shown separately) between the first housing 421 and the second housing 422.

According to an embodiment, the sixth opening 606 (e.g., an air vent) may improve the quality of sound output through the first speaker 411. The sixth opening 606 may enable rich sound transmission through the first speaker 411. The sixth opening 606 may, for example, enrich the mid-low range sound. Although not shown separately, the location or number of the sixth opening 606 is not limited to the illustrated example and may be varied.

According to an embodiment, the electronic device 2 may include a second speaker assembly (e.g., the second speaker assembly 2100 in FIG. 21) corresponding to the second speaker hole SH2 (see FIG. 2). The second speaker assembly may be implemented to be at least partially identical or similar to the first speaker assembly 4 corresponding to the first speaker hole SH1.

FIG. 8 is a cross-sectional view of a portion of an example electronic device 2 taken along line A-A' of FIG. 3, according to an embodiment of the disclosure. FIG. 9 illustrates a portion denoted designated by reference numeral 'B' of FIG. 8, according to an embodiment of the disclosure. It should be understood that the disclosure encompasses and includes all combinations of the features and/or embodiments disclosed with respect to FIGS. 8 and 9. That is, all combinations of the features described below with respect to FIGS. 8 and 9 should be considered to be included in the disclosure as specific examples.

Referring to FIGS. 8 and 9, the electronic device 2 may include a display module 201 and/or a first speaker assembly 4. The first speaker assembly 4 may include a first speaker 411, a first speaker housing 42, a first metal plate 51, a second metal plate 52, a third metal plate 53, a fourth metal plate 54, a sound-permeable member 810 (or a sound-permeable material), and an elastic member 820 (or an elastic body, an elastic material, a flexible material, or a flexible member). The first speaker housing 42 may include a first housing 421 and a second housing 422. In FIGS. 8 and 9, descriptions of some components having the same reference numerals as those illustrated in FIGS. 3, 4, 5, 6, and 7 are omitted.

According to an embodiment, the first speaker assembly 4 may include a first internal space 801, a second internal space 802 (e.g., a passage), and/or a sound output hole 803.

According to an embodiment, the first internal space 801 may face the diaphragm 760 (see FIG. 7) of the first speaker 411. The first internal space 801 may include, for example, at least in part a space between the first speaker 411 and the second metal plate 52. The first internal space 801 may be provided (or formed) at least in part by, for example, a combination of the second metal plate 52 and the second housing 422.

According to an embodiment, the second internal space 802 may extend from the first internal space 801 to the speaker output hole 803. The second internal space 802 may be provided (or formed) at least in part by, for example, a combination of the second housing 422 and the second metal plate 52. The sound generated from the first speaker 411 may be transferred from the first internal space 801 to the second internal space 802, guided by the second internal space 802, and output to the outside of the first speaker assembly 4 through the sound output hole 803.

According to an embodiment, the sound output hole 803 may be disposed to correspond to the first speaker hole SH1 of the frame 22 (see FIG. 3). The sound generated from the first speaker 411 may be output to the outside of the electronic device 2 through the first speaker hole SH1 (see FIG. 3).

According to an embodiment, the sound-permeable member 810 may be disposed on or combined with the first speaker housing 42, corresponding to the sound output hole 803. The sound generated from the first speaker 411 may pass through the sound-permeable member 810 and be output to the outside of the electronic device 2. The sound-permeable member 810 may include, for example, a porous member or a mesh member. The sound-permeable member 810 may reduce or prevent external foreign substances, such as dust or moisture, from entering the inside of the first speaker assembly 94 through the sound output hole 803.

According to an embodiment, the elastic member 820 may be disposed on or combined with the first speaker housing 42. The elastic member 820 may be combined with the sound-permeable member 810 and support the sound-permeable member 810. The elastic member 820 may be provided (or formed) in an annular shape (or loop shape), for example, including an opening corresponding to the sound output hole 803 of the first speaker housing 42. The elastic member 820 may be disposed elastically between the first speaker housing 42 and the frame 22 (see FIG. 3). The elastic member 820 may reduce or prevent the sound generated from the first speaker 411 from leaking between the first speaker housing 42 and the frame 22 (see FIG. 3). The elastic member 820 may reduce or prevent external foreign substances, such as dust or moisture, from entering the interior of the first speaker assembly 4 through a space between the first speaker housing 42 and the frame 22 (see FIG. 3). The elastic member 820 may include, for example, sponge or rubber, but is not limited thereto.

According to an embodiment, the first metal plate 51 may include a first portion 511 and a second portion 512 extending from the first portion 511. The first portion 511 may overlap with the first speaker 411 when viewed from above the display module 201 (or the front surface 20A in FIG. 2) (e.g., when viewed in the -z-axis direction). The second portion 512 may not overlap with the first speaker 411 when viewed from above the display module 201. The second portion 512 may surround at least in part the first portion 511 overlapping with the first speaker 411 when viewed from above the display module 201. For example, the second portion 512 may surround the first portion 511 laterally when viewed from above the display module 201. The second portion 512 may be arranged (or extended), for example, in a loop shape that surrounds the first portion 511 of the first metal plate 51 when viewed from above the display module 201.

According to an embodiment, the first metal plate 51 may include a first surface 51A and a second surface 51B. The first surface 51A and the second surface 51B may be arranged opposite each other.

According to an embodiment, the first surface 51A of the first metal plate 51 may be defined or interpreted as a 'first conductive surface' formed by a metallic material included in the first metal plate 51. The second surface 51B of the first metal plate 51 may be defined or interpreted as a 'second conductive surface' formed by a metallic material included in the first metal plate 51.

According to an embodiment, the first surface 51A of the first metal plate 51 may face at least in part the first speaker 411. The second surface 51B of the first metal plate 51 may face at least in part the display module 201.

According to an embodiment, the first surface 51A of the first metal plate 51 may include a first region 901 and a second region 902 extending from the first region 901. The first region 901 of the first surface 51A may be included in the first portion 511. The second region 902 of the first surface 51A may be included in the second portion 512.

According to an embodiment, the first region 901 of the first surface 51A may face the first speaker 411. The first region 901 may overlap with the first speaker 411 when viewed from above the display module 201.

According to an embodiment, the second region 902 of the first surface 51A may surround at least in part the first region 901 of the first surface 51A when viewed from above the display module 201. The second region 902 of the first surface 51A may be arranged, for example, in a loop shape.

According to an embodiment, the second region 902 of the first surface 51A may include a first protrusion P1 and a second protrusion P2. The first protrusion P1 and the second protrusion P2 may protrude toward the rear portion 23 of the frame 22 (see FIG. 3) with respect to the first region 901 of the first surface 51A.

According to an embodiment, the second protrusion P2 of the second region 902 may be positioned between the first region 901 and the first protrusion P1 of the second region 902.

According to an embodiment, the first protrusion P1 of the second region 902 may be arranged in a loop shape along the second region 902.

According to an embodiment, the second protrusion P2 of the second region 902 may be arranged in a loop shape along the second region 902.

According to an embodiment, the first protrusion P1 of the second region 902 may be provided (or formed) by bending an outline portion (or outline area) included in the second portion 512 of the first metal plate 51 toward the rear portion 23 of the frame 22 (see FIG. 3).

According to an embodiment, the second protrusion P2 of the second region 902 may be provided (or formed) by bending a part of the second portion 512 of the first metal plate 51 convexly (or in a convex shape) toward the rear portion 23 of the frame 22 (see FIG. 3).

According to an embodiment, the first protrusion P1 and the second protrusion P2 of the second region 902 may reduce the influence of the magnetic forces ① of the first speaker 411 on the display module 201 and/or the electromagnetic induction panel 305. The first protrusion P1 and the second protrusion P2 may reduce the magnetic force ⑤, of the magnetic force ① of the first speaker 411, that leaks to the display module 201 and/or the electromagnetic induction panel 305. While the magnetic force ① of the first speaker 411 flows on the first surface 51A (e.g., the first conductive surface) of the first metal plate 51, the second protrusion P2 may scatter or reflect the magnetic force , which is part of the magnetic force ①, thereby reducing the magnetic force (5) that leaks to the display module 201 and/or the electromagnetic induction panel 305. While the magnetic force ① of the first speaker 411 flows on the first surface 51A of the first metal plate 51, the magnetic force ③, which is part of the magnetic force ①, may travel beyond the second protrusion P2. The first protrusion P1 may scatter or reflect the magnetic force ④, which is part of the magnetic force ③, thereby reducing the magnetic force ⑤ that leaks to the display module 201 and/or the electromagnetic induction panel 305.

According to an embodiment, while the magnetic force ① of the first speaker 411 flows on the first surface 51A (e.g., the first conductive surface) of the first metal plate 51, the first metal plate 51 may absorb part of the magnetic force ① of the first speaker 411, thereby reducing the magnetic force ⑤ leaking to the display module 201 and/or the electromagnetic induction panel 305.

According to various embodiments, although not shown separately, the number of protrusions included in the second region 902 is not limited to the illustrated example and may be varied. The second region 902 is not limited to a double protrusion structure implemented by a combination of the first and second protrusions P1 and P2 but may include, for example, a multi-protrusion structure including a combination of three or more protrusions. The second region 902 may further include, for example, a third protrusion (not shown separately) formed in substantially the same manner as the second protrusion P2. The third protrusion may be located between the first region 901 and the second protrusion P2 or between the first protrusion P1 and the second protrusion P2.

According to various embodiments, although not shown separately, the first protrusion P1 may be omitted, and the second region 902 may be implemented to include a plurality of protrusions formed in substantially the same manner as the second protrusion P2.

According to various embodiments, although not shown separately, the cross-sectional shape of the second protrusion P2 of the second region 902 is not limited to the illustrated example and may be varied.

According to an embodiment, the portion denoted by reference numeral 'C' may be implemented in substantially the same manner as the portion denoted by reference numeral 'B', such that the second region 902 included in the second portion 512 of the first metal plate 51 may include the first protrusion P1 and the second protrusion P2.

According to an embodiment, the relative position of the first protrusion P1 with respect to the first speaker 411, or the shape (e.g., cross-sectional shape, height, and/or extension length) of the first protrusion P1, may be implemented to reduce or prevent the magnetic force ① of the first speaker 411 from leaking to the display module 201 and/or the electromagnetic induction panel 305.

According to an embodiment, the relative position of the second protrusion P2 with respect to the first speaker 411, or the shape (e.g., cross-sectional shape, height, and/or extension length) of the second protrusion P2, may be implemented to reduce or prevent the magnetic force ① of the first speaker 411 from leaking to the display module 201 and/or the electromagnetic induction panel 305.

According to an embodiment, the relative position between the first protrusion P1 and the second protrusion P2, the shape (e.g., cross-sectional shape, height, and/or extension length) of the first protrusion P1 relative to the second protrusion P2, and/or the shape (e.g., cross-sectional shape, height, and/or extension length) of the second protrusion P2 relative to the first protrusion P1 may be implemented to reduce or prevent the magnetic force ① of the first speaker 411 from leaking to the display module 201 and/or the electromagnetic induction panel 305.

According to an embodiment, a combination (e.g., double protrusion structure) of the first protrusion P1 and the second protrusion P2 may be arranged at a portion of the first metal plate 51 where relatively significant leakage of the magnetic force ① occurs from the first speaker 411 to the display module 201 and/or the electromagnetic induction panel 305, thereby reducing or preventing the leakage. The combination of the first protrusion P1 and the second protrusion P2 may be arranged, for example, on at least a part of the first metal plate 51 where the magnetic force ① of the first speaker 411 is relatively concentrated.

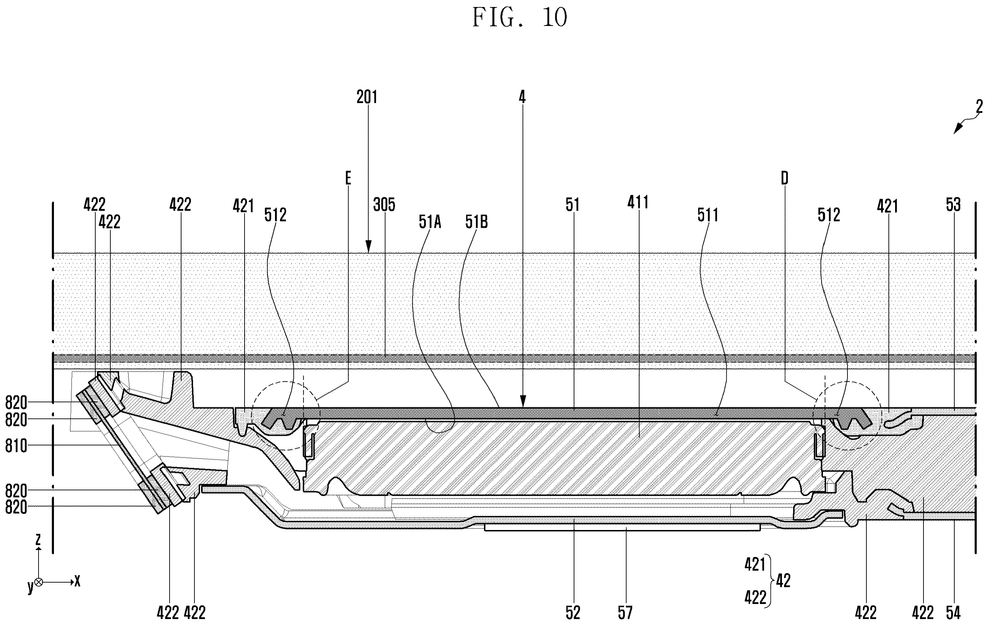

FIG. 10 is a cross-sectional view of a portion of an example electronic device 2 taken along line A-A' of FIG. 3, according to an embodiment of the disclosure. FIG. 11 illustrates a portion denoted by reference numeral 'D' in FIG. 10, according to an embodiment of the disclosure. It should be understood that the disclosure encompasses and includes all combinations of the features and/or embodiments disclosed with respect to FIGS. 8 and 9. That is, all combinations of the features described below with respect to FIGS. 8 and 9 should be considered to be included in the disclosure as specific examples.

Referring to FIGS. 10 and 11, the electronic device 2 may include a display module 201 and/or a first speaker assembly 4. The first speaker assembly 4 may include a first speaker 411, a first speaker housing 42, a first metal plate 51, a second metal plate 52, a third metal plate 53, a fourth metal plate 54, a sound-permeable member 810 (or a sound-permeable material), and an elastic member 820. The first speaker housing 42 may include a first housing 421 and a second housing 422. In FIGS. 10 and 11, descriptions of some components having the same reference numerals as those illustrated in FIGS. 8 and 9 are omitted. The same terminology and/or the same reference numerals may be used for components that are at least partially identical or similar to or related to the components illustrated in FIGS. 8 and 9.

According to an embodiment, the first metal plate 51 may include a first portion 511 and a second portion 512 extending from the first portion 511. The first portion 511 may overlap with the first speaker 411 when viewed from above the display module 201 (or the front surface 20A in FIG. 2). The second portion 512 may not overlap with the first speaker 411 when viewed from above the display module 201. The second portion 512 may surround at least in part the first portion 511 that overlaps with the first speaker 411 when viewed from above the display module 201. The second portion 512 may be arranged, for example, in a loop shape that surrounds the first portion 511 of the first metal plate 51 when viewed from above the display module 201. The first metal plate 51 may include a first surface 51A and a second surface 51B. The first surface 51A and the second surface 51B may be arranged opposite each other. The first surface 51A of the first metal plate 51 may include a first region 901 and a second region 902 extending from the first region 901. The first region 901 of the first surface 51A may be included in the first portion 511. The second region 902 of the first surface 51A may be included in the second portion 512.

According to an embodiment, the second region 902 of the first surface 51A may include a first protrusion P1 and a second protrusion P2. The first protrusion P1 and the second protrusion P2 may protrude toward the rear portion 23 of the frame 22 (see FIG. 3) with respect to the first region 901 of the first surface 51A. The second protrusion P2 of the second region 902 may be positioned between the first region 901 and the first protrusion P1 of the second region 902.

According to an embodiment, the first protrusion P1 of the second region 902 may be provided (or formed) by bending an outline portion (or outline area) included in the second portion 512 of the first metal plate 51 toward the rear portion 23 of the frame 22 (see FIG. 3).

According to an embodiment, the second protrusion P2 may be provided (or formed) by making a part of the second portion 512 of the first metal plate 51 thicker from the second surface 51B than the other part of the second portion 512.

According to various embodiments, the second protrusion P2 may be implemented by arranging or combining a separate metal body (or metal member) (not shown separately) on or with the first surface 51A. The second protrusion P2 may be defined or interpreted as a separate element from the first metal plate 51.

According to an embodiment, the first protrusion P1 of the second region 902 may be arranged in a loop shape along the second region 902.

According to an embodiment, the second protrusion P2 of the second region 902 may be arranged in a loop shape along the second region 902.

According to an embodiment, the first protrusion P1 and the second protrusion P2 of the second region 902 may reduce the influence of the magnetic forces ① of the first speaker 411 on the display module 201 and/or the electromagnetic induction panel 305. The first protrusion P1 and the second protrusion P2 may reduce the magnetic force ⑤, of the magnetic force ① of the first speaker 411, that leaks to the display module 201 and/or the electromagnetic induction panel 305. While the magnetic force ① of the first speaker 411 flows on the first surface 51A (e.g., the first conductive surface) of the first metal plate 51, the second protrusion P2 may scatter or reflect the magnetic force , which is part of the magnetic force ①, thereby reducing the magnetic force (5) that leaks to the display module 201 and/or the electromagnetic induction panel 305. While the magnetic force ① of the first speaker 411 flows on the first surface 51A of the first metal plate 51, the magnetic force ③, which is part of the magnetic force ①, may travel beyond the second protrusion P2. The first protrusion P1 may scatter or reflect the magnetic force ④, which is part of the magnetic force ③, thereby reducing the magnetic force ⑤ that leaks to the display module 201 and/or the electromagnetic induction panel 305.

According to an embodiment, while the magnetic force ① of the first speaker 411 flows on the first surface 51A (e.g., the first conductive surface) of the first metal plate 51, the first metal plate 51 may absorb part of the magnetic force ① of the first speaker 411, thereby reducing the magnetic force ⑤ leaking to the display module 201 and/or the electromagnetic induction panel 305.

According to an embodiment, a combination (e.g., a double protrusion structure) of the first protrusion P1 and the second protrusion P2 may contribute to slimming by reducing the thickness of the first metal plate 51 while improving the magnetic shielding characteristics.

According to various embodiments, although not shown separately, the number of protrusions included in the second region 902 is not limited to the illustrated example and may be varied. The second region 902 is not limited to a double protrusion structure implemented by a combination of the first and second protrusions P1 and P2 but may include, for example, a multi-protrusion structure including a combination of three or more protrusions. The second region 902 may further include, for example, a third protrusion (not shown separately) formed in substantially the same manner as the second protrusion P2. The third protrusion may be located between the first region 901 and the second protrusion P2 or between the first protrusion P1 and the second protrusion P2.

According to various embodiments, although not shown separately, the first protrusion P1 may be omitted, and the second region 902 may be implemented to include a plurality of protrusions formed in substantially the same manner as the second protrusion P2.

According to various embodiments, although not shown separately, the cross-sectional shape of the second protrusion P2 of the second region 902 is not limited to the illustrated example and may be varied.

According to an embodiment, the portion denoted by reference numeral 'E' may be implemented in substantially the same manner as the portion denoted by reference numeral 'D', such that the second region 902 included in the second portion 512 of the first metal plate 51 may include the first protrusion P1 and the second protrusion P2.

According to various embodiments, although not shown separately, the second region 902 may be implemented to include at least one second protrusion P2 according to the example of FIG. 9 and at least one second protrusion P2 according to the example of FIG. 11.

According to an embodiment, the relative position of the first protrusion P1 with respect to the first speaker 411, or the shape (e.g., cross-sectional shape, height, and/or extension length) of the first protrusion P1, may be implemented to reduce or prevent the magnetic force ① of the first speaker 411 from leaking to the display module 201 and/or the electromagnetic induction panel 305.

According to an embodiment, the relative position of the second protrusion P2 with respect to the first speaker 411, or the shape (e.g., cross-sectional shape, height, and/or extension length) of the second protrusion P2, may be implemented to reduce or prevent the magnetic force ① of the first speaker 411 from leaking to the display module 201 and/or the electromagnetic induction panel 305.

According to an embodiment, the relative position between the first protrusion P1 and the second protrusion P2, the shape (e.g., cross-sectional shape, height, and/or extension length) of the first protrusion P1 relative to the second protrusion P2, and/or the shape (e.g., cross-sectional shape, height, and/or extension length) of the second protrusion P2 relative to the first protrusion P1 may be implemented to reduce or prevent the magnetic force ① of the first speaker 411 from leaking to the display module 201 and/or the electromagnetic induction panel 305.

According to an embodiment, a combination (e.g., double protrusion structure) of the first protrusion P1 and the second protrusion P2 may be arranged at a portion of the first metal plate 51 where relatively significant leakage of the magnetic force ① occurs from the first speaker 411 to the display module 201 and/or the electromagnetic induction panel 305, thereby reducing or preventing the leakage. The combination of the first protrusion P1 and the second protrusion P2 may be arranged, for example, on at least a part of the first metal plate 51 where the magnetic force ① of the first speaker 411 is relatively concentrated.

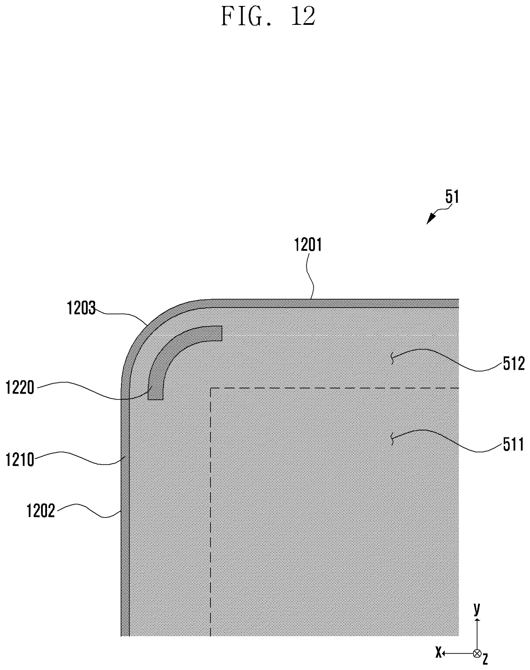

Hereinafter, various forms of the first metal plate 51 are disclosed with reference to FIGS. 12, 13, 14, 15, 16, and 17. These may be interpreted as being included within the scope of various embodiments of the disclosure as changing or modifying at least some of the plurality of components. With respect to the description of one example first metal plate, the same terminology and/or the same reference numerals may be used for components that are at least partially identical or similar or related to another example first metal plate. In one example and another example, two components with the same terminology but different reference numerals may be understood to be substantially the same or have changed or modified forms.

FIG. 12 is a view illustrating a portion of a first metal plate 51, according to an embodiment of the disclosure. It should be understood that the disclosure encompasses and includes all combinations of the features and/or embodiments disclosed with respect to FIG. 12. That is, all combinations of the features described below with respect to FIG. 12 should be considered to be included in the disclosure as specific examples.

Referring to FIG. 12, the first metal plate 51 may include a first portion 511 and a second portion 512 extending from the first portion 511. The first portion 511 may overlap with the first speaker 411 (see FIG. 6) when viewed from above the front surface 20A of the electronic device 2 (see FIG. 2). The second portion 512 may surround at least in part the first portion 511 when viewed from above the front surface 20A (see FIG. 2) or the rear surface 20B (see FIG. 2) of the electronic device 2. The second portion 512 may not overlap with the first speaker 411 (see FIG. 6) when viewed from above the front surface 20A of the electronic device 2 (see FIG. 2).

According to an embodiment, edges of the first metal plate 51 may include a first edge 1201, a second edge 1202, and a corner 1203 where the first edge 1201 and the second edge 1202 are connected. The first edge 1201, the second edge 1202, and the corner 1203 may be included in the second portion 512 of the first metal plate 51.

According to an embodiment, the corner 1203 may be formed in a curved shape that smoothly connects the first edge 1201 and the second edge 1202.

According to an embodiment, the first edge 1201 and the second edge 1202 may extend substantially straight and may not be parallel to each other. The first edge 1201 and the second edge 1202 may form, for example, an angle of approximately 90 degrees. Although not shown separately, the first edge 1201 and the second edge 1202 may form, for example, an acute or obtuse angle.

According to an embodiment, the first metal plate 51 may include a first protrusion 1210 and a second protrusion 1220 included in the second portion 512.

According to an embodiment, the first protrusion 1210 may be arranged in a loop shape along the edges of the first metal plate 51. The first protrusion 1210 may include, for example, the first protrusion P1 of FIG. 9.

According to an embodiment, the second protrusion 1220 may be disposed corresponding to the corner 1203. The second protrusion 1220 may be positioned between the first protrusion 1210 and the first portion 511 when viewed from above the rear surface 20B of the electronic device 2 (see FIG. 2).

According to an embodiment, the second protrusion 1220 may be provided (or formed) in a curved shape corresponding to the curved corner 1203.

According to an embodiment, the second protrusion 1220 may be formed in a manner at least partially identical or similar to the second protrusion P2 according to the example of FIG. 9 or the second protrusion P2 according to the example of FIG. 11.

According to various embodiments, although not shown separately, the first edge 1201 and the second edge 1202 may be connected in a form in which the curved corner 1203 is omitted, and the first protrusion 1210 may be implemented in a correspondingly angular form.

According to various embodiments, although not shown separately, the first edge 1201 and the second edge 1202 may be connected in a form in which the curved corner 1203 is omitted, and the first protrusion 1210 and the second protrusion 1220 may be implemented in a correspondingly angular form.

According to various embodiments, although not shown separately, the second protrusion 1220 may be implemented in an angular form in which two protrusions extending in different directions are connected. The two protrusions of the second protrusion 1220 may form an angle of about 90 degrees, an acute angle, or an obtuse angle.

According to an embodiment, the magnetic force of the first speaker 411 may be relatively concentrated at a portion (e.g., the corner 1203 or an angled portion (not shown)) of the first metal plate 51 where the first edge 1201 and the second edge 1202 are connected. The first protrusion 1210 and the second protrusion 1220 may reduce the magnetic force from leaking from the portion, where the first and second edges 1201 and 1202 are connected, of the first metal plate 51 to the display module 201 (see FIG. 3) and/or the electromagnetic induction panel 305 (see FIG. 3).

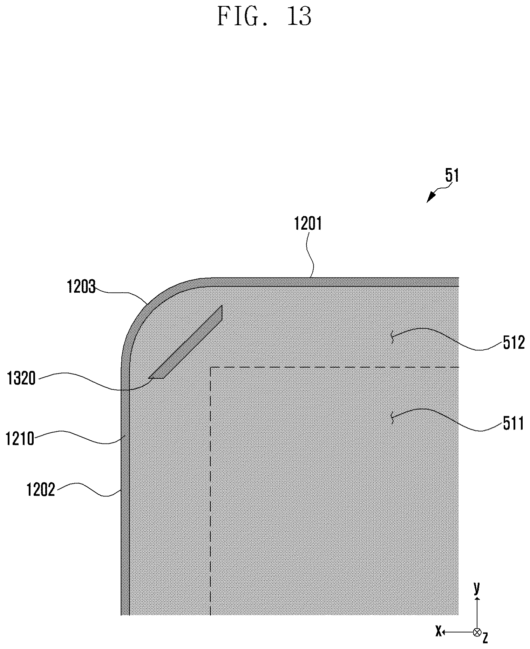

FIG. 13 is a view illustrating a portion of a first metal plate 51, according to an embodiment of the disclosure. It should be understood that the disclosure encompasses and includes all combinations of the features and/or embodiments disclosed with respect to FIG. 13. That is, all combinations of the features described below with respect to FIG. 13 should be considered to be included in the disclosure as specific examples.

Referring to FIG. 13, the first metal plate 51 may include a first portion 511 and a second portion 512 extending from the first portion 511. The first portion 511 may overlap with the first speaker 411 (see FIG. 6) when viewed from above the front surface 20A of the electronic device 2 (see FIG. 2). The second portion 512 may surround at least in part the first portion 511 when viewed from above the front surface 20A (see FIG. 2) or the rear surface 20B (see FIG. 2) of the electronic device 2. The second portion 512 may not overlap with the first speaker 411 (see FIG. 6) when viewed from above the front surface 20A of the electronic device 2 (see FIG. 2).

According to an embodiment, the edges of the first metal plate 51 are included in the second portion 512, and may include a first edge 1201, a second edge 1202, and a corner 1203 where the first edge 1201 and the second edge 1202 are connected.

According to an embodiment, the first metal plate 51 may include a first protrusion 1210 and a second protrusion 1320 included in the second portion 512.

According to an embodiment, the first protrusion 1210 may be arranged in a loop shape along the edges of the first metal plate 51. The first protrusion 1210 may include, for example, the first protrusion P1 of FIG. 9.

According to an embodiment, the second protrusion 1320 may be disposed corresponding to the corner 1203. The second protrusion 1320 may be positioned between the first protrusion 1210 and the first portion 511 when viewed from above the rear surface 20B of the electronic device 2 (see FIG. 2).

According to an embodiment, the second protrusion 1320 may be provided (or formed) in a straight shape forming an obtuse angle with the first edge 1201 and the second edge 1202 that extend substantially straight.

According to an embodiment, the second protrusion 1320 may be formed in a manner at least partially identical or similar to the second protrusion P2 according to the example of FIG. 9 or the second protrusion P2 according to the example of FIG. 11.

According to various embodiments, although not shown separately, the first edge 1201 and the second edge 1202 may be connected in a form in which the curved corner 1203 is omitted, and the first protrusion 1210 may be implemented in a corresponding angular shape.

According to an embodiment, the magnetic force of the first speaker 411 may be relatively concentrated at a portion (e.g., the corner 1203 or an angled portion (not shown)) of the first metal plate 51 where the first edge 1201 and the second edge 1202 are connected. The first protrusion 1210 and the second protrusion 1320 may reduce the magnetic force from leaking from the portion, where the first and second edges 1201 and 1202 are connected, of the first metal plate 51 to the display module 201 (see FIG. 3) and/or the electromagnetic induction panel 305 (see FIG. 3).

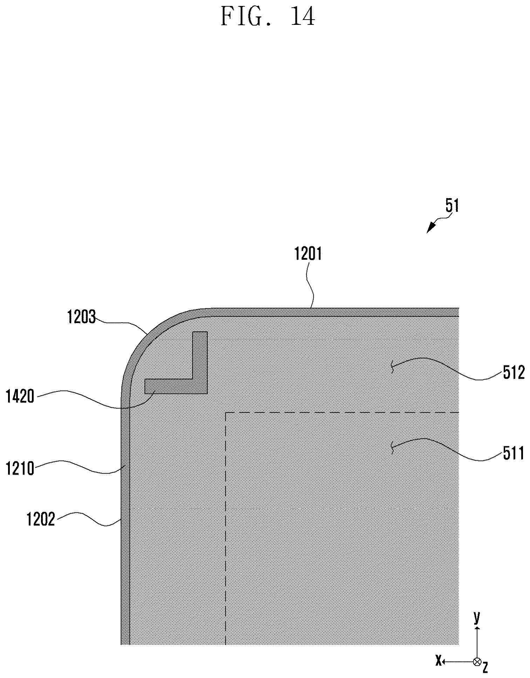

FIG. 14 is a view illustrating a portion of a first metal plate 51, according to an embodiment of the disclosure. It should be understood that the disclosure encompasses and includes all combinations of the features and/or embodiments disclosed with respect to FIG. 14. That is, all combinations of the features described below with respect to FIG. 14 should be considered to be included in the disclosure as specific examples.

Referring to FIG. 14, the first metal plate 51 may include a first portion 511 and a second portion 512 extending from the first portion 511. The first portion 511 may overlap with the first speaker 411 (see FIG. 6) when viewed from above the front surface 20A of the electronic device 2 (see FIG. 2). The second portion 512 may surround at least in part the first portion 511 when viewed from above the front surface 20A (see FIG. 2) or the rear surface 20B (see FIG. 2) of the electronic device 2. The second portion 512 may not overlap with the first speaker 411 (see FIG. 6) when viewed from above the front surface 20A of the electronic device 2 (see FIG. 2).

According to an embodiment, the edges of the first metal plate 51 are included in the second portion 512, and may include a first edge 1201, a second edge 1202, and a corner 1203 where the first edge 1201 and the second edge 1202 are connected.

According to an embodiment, the first metal plate 51 may include a first protrusion 1210 and a second protrusion 1420 included in the second portion 512.

According to an embodiment, the first protrusion 1210 may be arranged in a loop shape along the edges of the first metal plate 51. The first protrusion 1210 may include, for example, the first protrusion P1 of FIG. 9.

According to an embodiment, the second protrusion 1420 may be disposed corresponding to the corner 1203. The second protrusion 1420 may be positioned between the first protrusion 1210 and the first portion 511 when viewed from above the rear surface 20B of the electronic device 2 (see FIG. 2).

According to an embodiment, the second protrusion 1420 may be provided (or formed) in an angular shape in which two protrusions extending substantially straight are connected. An angled portion where the two protrusions of the second protrusion 1420 are connected may be positioned toward the first portion 511 when viewed from above the rear surface 20B of the electronic device 2 (see FIG. 2), and the two protrusions may extend from the angled portion toward the edge of the first metal plate 51.

According to an embodiment, the two protrusions of the second protrusion 1420 may form an angle of approximately 90 degrees.

According to various embodiments, although not shown separately, the two protrusions of the second protrusion 1420 may form an acute or obtuse angle.

According to various embodiments, although not shown separately, the portion where the two protrusions of the second protrusion 1420 are connected may be provided (or formed) in a curved shape.

According to an embodiment, the second protrusion 1420 may be formed in a manner at least partially identical or similar to the second protrusion P2 according to the example of FIG. 9 or the second protrusion P2 according to the example of FIG. 11.

According to various embodiments, although not shown separately, the first edge 1201 and the second edge 1202 may be connected in a form in which the curved corner 1203 is omitted, and the first protrusion 1210 may be implemented in a corresponding angular form.

According to an embodiment, the magnetic force of the first speaker 411 may be relatively concentrated at a portion (e.g., the corner 1203 or an angled portion (not shown)) of the first metal plate 51 where the first edge 1201 and the second edge 1202 are connected. The first protrusion 1210 and the second protrusion 1420 may reduce the magnetic force from leaking from the portion, where the first and second edges 1201 and 1202 are connected, of the first metal plate 51 to the display module 201 (see FIG. 3) and/or the electromagnetic induction panel 305 (see FIG. 3).

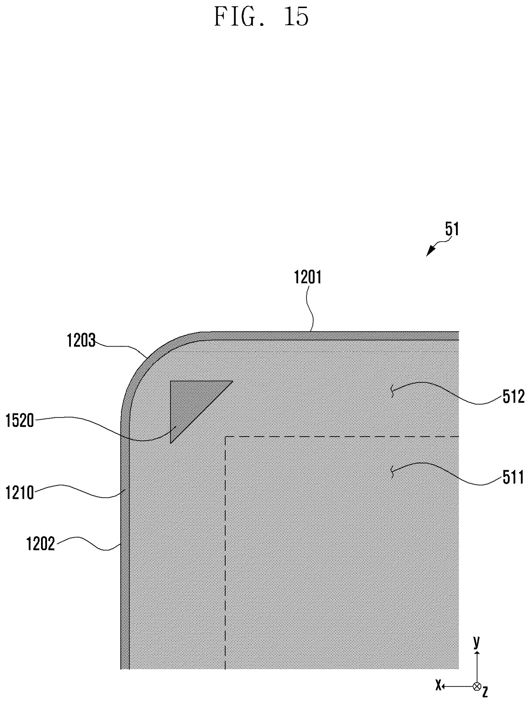

FIG. 15 is a view illustrating a portion of a first metal plate 51, according to an embodiment of the disclosure. It should be understood that the disclosure encompasses and includes all combinations of the features and/or embodiments disclosed with respect to FIG. 15. That is, all combinations of the features described below with respect to FIG. 15 should be considered to be included in the disclosure as specific examples.

Referring to FIG. 15, the first metal plate 51 may include a first portion 511 and a second portion 512 extending from the first portion 511. The first portion 511 may overlap with the first speaker 411 (see FIG. 6) when viewed from above the front surface 20A of the electronic device 2 (see FIG. 2). The second portion 512 may surround at least in part the first portion 511 when viewed from above the front surface 20A (see FIG. 2) or the rear surface 20B (see FIG. 2) of the electronic device 2. The second portion 512 may not overlap with the first speaker 411 (see FIG. 6) when viewed from above the front surface 20A of the electronic device 2 (see FIG. 2).

According to an embodiment, the edges of the first metal plate 51 are included in the second portion 512, and may include a first edge 1201, a second edge 1202, and a corner 1203 where the first edge 1201 and the second edge 1202 are connected.

According to an embodiment, the first metal plate 51 may include a first protrusion 1210 and a second protrusion 1520 included in the second portion 512.

According to an embodiment, the first protrusion 1210 may be arranged in a loop shape along the edges of the first metal plate 51. The first protrusion 1210 may include, for example, the first protrusion P1 of FIG. 9.

According to an embodiment, the second protrusion 1520 may be disposed corresponding to the corner 1203. The second protrusion 1520 may be positioned between the first protrusion 1210 and the first portion 511 when viewed from above the rear surface 20B of the electronic device 2 (see FIG. 2).

According to an embodiment, the second protrusion 1520 may be a right triangle when viewed from above the rear surface 20B of the electronic device 2 (see FIG. 2), and the hypotenuse (e.g., the long side) of the right triangle may face the first portion 511.

According to various embodiments, although not shown separately, the second protrusion 1520 may be various and is not limited to a right triangle when viewed from above the rear surface 20B of the electronic device 2 (see FIG. 2).

According to an embodiment, the second protrusion 1520 may be formed in a manner at least partially identical or similar to the second protrusion P2 according to the example of FIG. 9 or the second protrusion P2 according to the example of FIG. 11.

According to various embodiments, although not shown separately, the first edge 1201 and the second edge 1202 may be connected in a form in which the curved corner 1203 is omitted, and the first protrusion 1210 may be implemented in a corresponding angular form.

According to an embodiment, the magnetic force of the first speaker 411 may be relatively concentrated at a portion (e.g., the corner 1203 or an angled portion (not shown)) of the first metal plate 51 where the first edge 1201 and the second edge 1202 are connected. The first protrusion 1210 and the second protrusion 1520 may reduce the magnetic force from leaking from the portion, where the first and second edges 1201 and 1202 are connected, of the first metal plate 51 to the display module 201 (see FIG. 3) and/or the electromagnetic induction panel 305 (see FIG. 3).

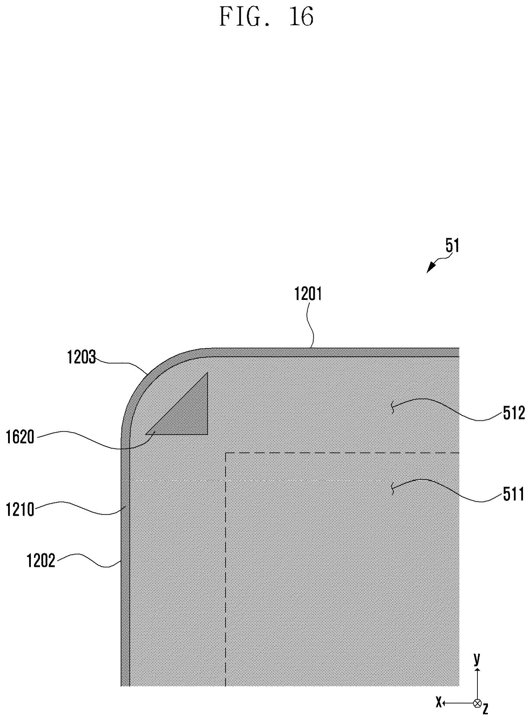

FIG. 16 is a view illustrating a portion of a first metal plate 51, according to an embodiment of the disclosure. It should be understood that the disclosure encompasses and includes all combinations of the features and/or embodiments disclosed with respect to FIG. 16. That is, all combinations of the features described below with respect to FIG. 16 should be considered to be included in the disclosure as specific examples.

Referring to FIG. 16, the first metal plate 51 may include a first portion 511 and a second portion 512 extending from the first portion 511. The first portion 511 may overlap with the first speaker 411 (see FIG. 6) when viewed from above the front surface 20A of the electronic device 2 (see FIG. 2). The second portion 512 may surround at least in part the first portion 511 when viewed from above the front surface 20A (see FIG. 2) or the rear surface 20B (see FIG. 2) of the electronic device 2. The second portion 512 may not overlap with the first speaker 411 (see FIG. 6) when viewed from above the front surface 20A of the electronic device 2 (see FIG. 2).

According to an embodiment, the edges of the first metal plate 51 are included in the second portion 512, and may include a first edge 1201, a second edge 1202, and a corner 1203 where the first edge 1201 and the second edge 1202 are connected.

According to an embodiment, the first metal plate 51 may include a first protrusion 1210 and a second protrusion 1620 included in the second portion 512.

According to an embodiment, the first protrusion 1210 may be arranged in a loop shape along the edges of the first metal plate 51. The first protrusion 1210 may include, for example, the first protrusion P1 of FIG. 9.

According to an embodiment, the second protrusion 1620 may be disposed corresponding to the corner 1203. The second protrusion 1620 may be positioned between the first protrusion 1210 and the first portion 511 when viewed from above the rear surface 20B of the electronic device 2 (see FIG. 2).

According to an embodiment, the second protrusion 1620 may be a right triangle when viewed from above the rear surface 20B of the electronic device 2 (see FIG. 2), and the hypotenuse (e.g., the long side) of the right triangle may face the corner 1203.

According to various embodiments, although not shown separately, the second protrusion 1620 may be various and is not limited to a right triangle when viewed from above the rear surface 20B of the electronic device 2 (see FIG. 2).

According to an embodiment, the second protrusion 1620 may be formed in a manner at least partially identical or similar to the second protrusion P2 according to the example of FIG. 9 or the second protrusion P2 according to the example of FIG. 11.

According to various embodiments, although not shown separately, the first edge 1201 and the second edge 1202 may be connected in a form in which the curved corner 1203 is omitted, and the first protrusion 1210 may be implemented in a corresponding angular form.

According to an embodiment, the magnetic force of the first speaker 411 may be relatively concentrated at a portion (e.g., the corner 1203 or an angled portion (not shown)) of the first metal plate 51 where the first edge 1201 and the second edge 1202 are connected. The first protrusion 1210 and the second protrusion 1620 may reduce the magnetic force from leaking from the portion, where the first and second edges 1201 and 1202 are connected, of the first metal plate 51 to the display module 201 (see FIG. 3) and/or the electromagnetic induction panel 305 (see FIG. 3).

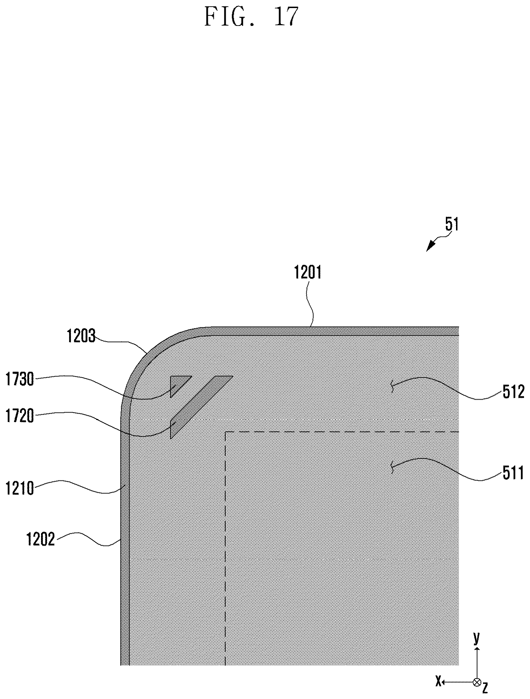

FIG. 17 is a view illustrating a portion of a first metal plate 51, according to an embodiment of the disclosure. It should be understood that the disclosure encompasses and includes all combinations of the features and/or embodiments disclosed with respect to FIG. 17. That is, all combinations of the features described below with respect to FIG. 17 should be considered to be included in the disclosure as specific examples.

Referring to FIG. 17, the first metal plate 51 may include a first portion 511 and a second portion 512 extending from the first portion 511. The first portion 511 may overlap with the first speaker 411 (see FIG. 6) when viewed from above the front surface 20A of the electronic device 2 (see FIG. 2). The second portion 512 may surround at least in part the first portion 511 when viewed from above the front surface 20A (see FIG. 2) or the rear surface 20B (see FIG. 2) of the electronic device 2. The second portion 512 may not overlap with the first speaker 411 (see FIG. 6) when viewed from above the front surface 20A of the electronic device 2 (see FIG. 2).

According to an embodiment, the edges of the first metal plate 51 are included in the second portion 512, and may include a first edge 1201, a second edge 1202, and a corner 1203 where the first edge 1201 and the second edge 1202 are connected.

According to an embodiment, the first metal plate 51 may include a first protrusion 1210, a second protrusion 1720, and/or a third protrusion 1730 included in the second portion 512.

According to an embodiment, the first protrusion 1210 may be arranged in a loop shape along the edges of the first metal plate 51. The first protrusion 1210 may include, for example, the first protrusion P1 of FIG. 9.

According to an embodiment, the second protrusion 1720 and the third protrusion 1730 may be disposed corresponding to the corner 1203. The second protrusion 1720 and the third protrusion 1730 may be positioned between the first protrusion 1210 and the first portion 511 when viewed from above the rear surface 20B of the electronic device 2 (see FIG. 2). The third protrusion 1730 may be positioned at least in part between the corner 1203 and the second protrusion 1720 when viewed from above the rear surface 20B of the electronic device 2 (see FIG. 2).

According to an embodiment, when viewed from above the rear surface 20B of the electronic device 2 (see FIG. 2), the second protrusion 1720 may be implemented in a straight line shape, and the third protrusion 1730 may be implemented in a triangular shape, but is not limited thereto.

According to an embodiment, the second protrusion 1720 and/or the third protrusion 1730 may be formed in a manner at least partially identical or similar to the second protrusion P2 according to the example of FIG. 9 or the second protrusion P2 according to the example of FIG. 11.

According to various embodiments, although not shown separately, the first edge 1201 and the second edge 1202 may be connected in a form in which the curved corner 1203 is omitted, and the first protrusion 1210 may be implemented in a corresponding angular form.

According to an embodiment, the magnetic force of the first speaker 411 may leak relatively more at a portion (e.g., the corner 1203 or an angled portion (not shown)) of the first metal plate 51 where the first edge 1201 and the second edge 1202 are connected. The first protrusion 1210, the second protrusion 1720, and the third protrusion 1730 may reduce the leakage of magnetic force from the portion, where the first edge 1201 and the second edge 1202 are connected, of the first metal plate 51 to the display module 201 (see FIG. 3) and/or the electromagnetic induction panel 305 (see FIG. 3).

Disclosed in FIGS. 12, 13, 14, 15, 16, and 17 are examples for reducing or preventing the magnetic force of the first speaker 411 (see FIG. 6) from leaking to the display module 201 (see FIG. 3) and/or the electromagnetic induction panel 305 (see FIG. 3) by being relatively concentrated at a portion (e.g., the curved corner 1203, or an angled corner (not shown separately)) of the first metal plate 51 where the first edge 1201 and the second edge 1202 are connected. Without being limited thereto, the location where the magnetic force of the first speaker 411 leaks may vary depending on the shape of the first metal plate 51 and/or the relative position between the first metal plate 51 and the first speaker 411, and accordingly, the position or shape (e.g., cross-sectional shape, height, and/or extension length) of the protrusion may vary.

Table 1 shows the magnetic strength measured at the corner portion and the center portion of the first speaker assembly 4 according to the FIG. 9 or 11 embodiment of the disclosure and the speaker assembly according to a comparative example.

**[Table 1]**

| | Speaker assembly of comparative example | | First speaker assembly 4 of disclosure | |
|---|---|---|---|---|
| | Corner portion | Center portion | Corner portion | Center portion |
| 1^{st} measurement | 100 | 22 | 85 | 24 |
| 2^{nd} measurement | 104 | 26 | 91 | 27 |
| 3^{rd} **measurement** | 98 | 23 | 89 | 24 |
| 4^{th} measurement | 94 | 31 | 86 | 32 |
| 5^{th} measurement | 94 | 21 | 88 | 22 |

Although not shown separately, the speaker assembly of the comparative example may not include the first protrusion P1 and the second protrusion P2 compared to the first speaker assembly 4 of the disclosure. With reference to Table 1, the 'corner portion' mentioned in Table 1 may refer to, for example, a portion of the first metal plate 51 (see FIG. 8 or 10) including a corner (e.g., the corner 1203 in FIG. 12) where two edges substantially meet and are connected. The 'center portion' mentioned in Table 1 may refer to, for example, a portion of the first metal plate 51 (see FIG. 8 or 10) overlapping with a combination (e.g., core) of the center pole 720 and the coil structure 750 of the first speaker 411.

Compared to the speaker assembly of the comparative example, the first speaker assembly 4 of the disclosure can reduce the leakage of magnetic force from the corner portion to the display module 201 (see FIG. 3) and/or the electromagnetic induction panel 305 (see FIG. 3) through the first protrusion P1 and the second protrusion P2.

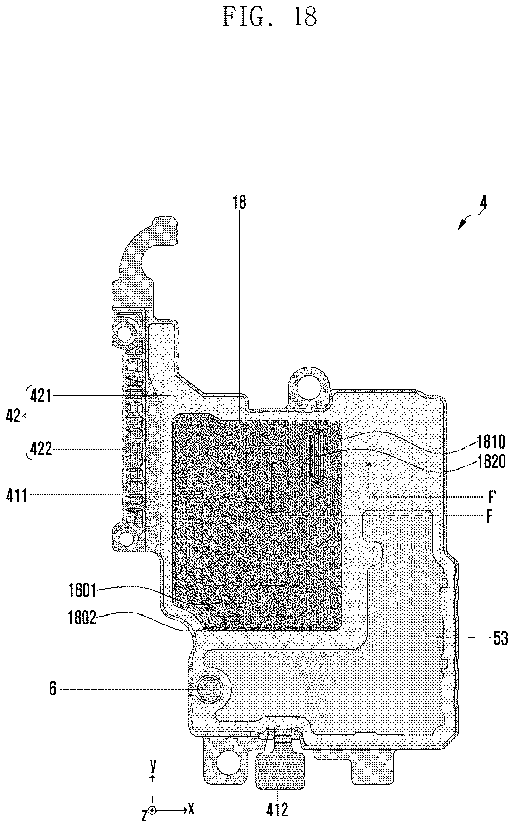

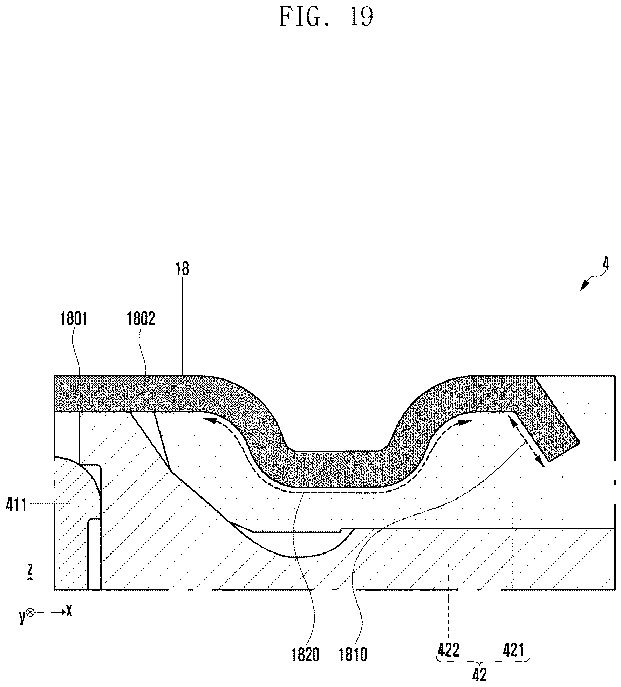

FIG. 18 is a view illustrating a first speaker assembly 4, according to an embodiment of the disclosure. FIG. 19 is a cross-sectional view of a portion of a first speaker assembly 4 taken along line F-F' of FIG. 18, according to an embodiment of the disclosure. It should be understood that the disclosure encompasses and includes all combinations of the features and/or embodiments disclosed with respect to FIGS. 18 and 19. That is, all combinations of the features described below with respect to FIGS. 18 and 19 should be considered to be included in the disclosure as specific examples.

The same terminology and/or the same reference numerals may be used for any one component disclosed in FIG. 18 that is at least partially identical or similar to or related to any one component disclosed in FIG. 6. Regarding the description of any one component disclosed in FIG. 18, if the terminology is the same as for any one component disclosed in FIG. 6 but the reference numeral is different, the two components may be understood as being substantially the same or as having changed or modified forms.

Referring to FIGS. 18 and 19, the first speaker assembly 4 may include a first speaker 411, a first electrical connection member 412, a first speaker housing 42, a first metal plate 18 (e.g., the first metal plate 51 in FIG. 6), a second metal plate (e.g., the second metal plate 52 in FIG. 6), a third metal plate 53, a fourth metal plate (e.g., the fourth metal plate 54 in FIG. 6), a fifth metal plate (e.g., the fifth metal plate 55 in FIG. 6), and/or a first air permeable member 6 (or first air permeable material).

According to an embodiment, the first speaker 411, the first electrical connection member 412, the first metal plate 18, the second metal plate (e.g., the second metal plate 52 in FIG. 6), the third metal plate 53, the fourth metal plate (e.g., the fourth metal plate 54 in FIG. 6), the fifth metal plate (e.g., the fifth metal plate 55 in FIG. 6), and/or the first air permeable member 6 may be disposed in the first speaker housing 42. The first speaker housing 42 may be provided (or formed) through a combination of the first housing 421 and the second housing 422.

According to an embodiment, the first metal plate 18 may include a first portion 1801 (e.g., the first portion 511 in FIG. 6) and a second portion 1802 (e.g., the second portion 512 in FIG. 6) extending from the first portion 1801. The first portion 1801 may overlap with the first speaker 411 when viewed from above the front surface 20A (see FIG. 2) or the rear surface 20B (see FIG. 2) of the electronic device 2. The second portion 1802 may surround the first portion 1801 at least in part laterally when viewed from above the front surface 20A (see FIG. 2) or the rear surface 20B (see FIG. 2) of the electronic device 2. The second portion 1802 may not overlap with the first speaker 411 when viewed from above the front surface 20A of the electronic device 2 (see FIG. 2).

According to an embodiment, the second portion 1802 of the first metal plate 18 may be arranged in a loop shape surrounding the first portion 1801 of the first metal plate 18 when viewed from above the front surface 20A of the electronic device 2 (see FIG. 2).

According to an embodiment, the second portion 1802 of the first metal plate 18 may include a first protrusion 1810 and a second protrusion 1820 protruding toward the rear portion 23 of the frame 22 (see FIG. 3).

According to an embodiment, the first protrusion 1810 may be arranged in a loop shape along the edges of the first metal plate 18. The first protrusion 1810 may include, for example, the first protrusion P1 of FIG. 9. The first protrusion 1810 may be provided (or formed), for example, by bending an outline portion (or outline area) included in the second portion 1802 of the first metal plate 18 toward the rear portion 23 (see FIG. 3) of the frame 22.

According to an embodiment, the second protrusion 1820 may be positioned between the first protrusion 1810 and the first portion 1801 when viewed from above the rear surface 20B of the electronic device 2 (see FIG. 2).

According to an embodiment, the second protrusion 1820 may be formed in a manner at least partially identical or similar to the second protrusion P2 according to the example of FIG. 9. The second protrusion 1820 may be formed, for example, by bending a part of the second portion 1802 of the first metal plate 18 convexly (or in a convex shape) toward the rear portion 23 of the frame 22 (see FIG. 3).

According to various embodiments, although not shown separately, the second protrusion 1820 may be formed in a manner at least partially identical or similar to the second protrusion P2 according to the example of FIG. 11. The second protrusion 1820 may be provided (or formed), for example, by making a part of the second portion 1802 of the first metal plate 18 thicker than the other part of the second portion 1802.

According to an embodiment, the first protrusion 1810 and the second protrusion 1820 may further reduce the transfer or transmission (e.g., leakage) of the magnetic force of the first speaker 411 to the display module 201 (see FIG. 3) and/or the electromagnetic induction panel 305, compared to a comparative example (not shown separately) in which at least one of the first and second protrusions 1810 and 1820 is omitted.

According to an embodiment, a combination (e.g., a double protrusion structure) of the first protrusion 1810 and the second protrusion 1820 may be disposed at a portion of the first metal plate 18 where the magnetic force of the first speaker 411 relatively largely leaks to the display module 201 (see FIG. 3) and/or the electromagnetic induction panel 305 (see FIG. 3), thereby reducing or preventing such leakage. The combination of the first protrusion 1810 and the second protrusion 1820 may be disposed, for example, at least at a portion of the first metal plate 18 where the magnetic force of the first speaker 411 relatively largely concentrates.

According to an embodiment, the second protrusion 1820 may be disposed at a portion of the first metal plate 18 where the magnetic force of the first speaker 411 relatively largely concentrates. The shape (e.g., cross-sectional shape, height, and/or extension length) of the second protrusion 1820 may be implemented so as to reduce or prevent the magnetic force of the first speaker 411 from leaking to the display module 201 (see FIG. 3) and/or the electromagnetic induction panel 305 (see FIG. 3).

According to an embodiment, when viewed from above the rear surface 20B of the electronic device 2 (see FIG. 2), the second protrusion 1820 may extend corresponding to a portion of the first protrusion 1810. When viewed from above the rear surface 20B of the electronic device 2 (see FIG. 2), the second protrusion 1820 may extend substantially parallel to a portion of the first protrusion 1810. The second protrusion 1820 may extend in a straight shape, for example, when viewed from above the rear surface 20B of the electronic device 2 (see FIG. 2).

According to an embodiment, when viewed from above the front surface 20A of the electronic device 2 (see FIG. 2), the first speaker 411 may be positioned closer to the second lateral portion 242 of the frame 22 (see FIG. 3) including the first speaker hole SH1 than to the second protrusion 1820. When viewed from above the front surface 20A of the electronic device 2 (see FIG. 2), the first speaker 411 may be positioned between the second protrusion 1820 and the second lateral portion 242 (see FIG. 3). When viewed from above the front surface 20A of the electronic device 2 (see FIG. 2), the second protrusion 1820 may be positioned apart from the second lateral portion 242 (see FIG. 3) with the first speaker 411 therebetween.

Although not shown separately, the relative position and/or shape (e.g., cross-sectional shape, height, and/or extension length) of the second protrusion 1820 with respect to the first protrusion 1810 may vary and is not limited to the illustrated example so as to reduce or prevent the magnetic force of the first speaker 411 from leaking to the display module 201 (see FIG. 3) and/or the electromagnetic induction panel 305 (see FIG. 3).

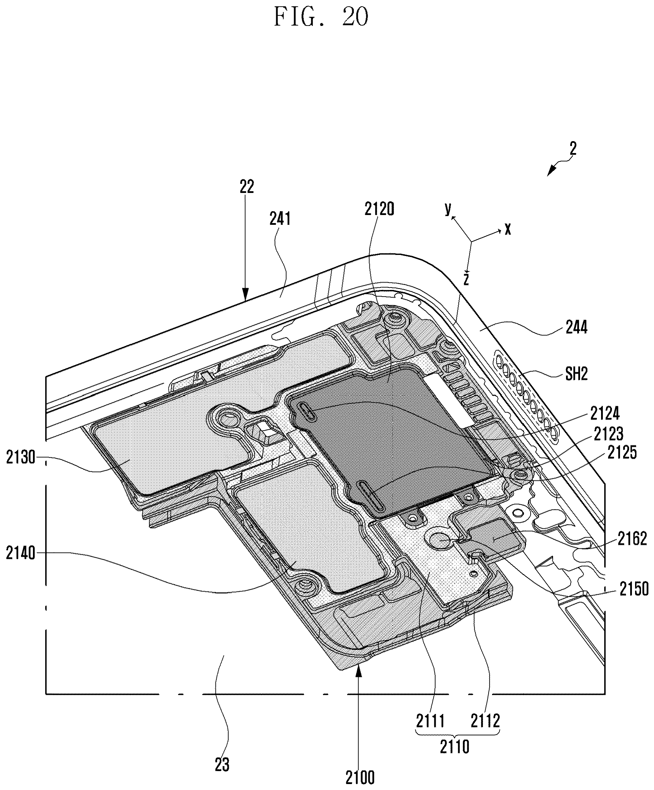

FIG. 20 is a perspective view of a portion of an example electronic device 2, according to an embodiment of the disclosure. FIG. 21 is a view illustrating a second speaker assembly 21, according to an embodiment of the disclosure. It should be understood that the disclosure encompasses and includes all combinations of the features and/or embodiments disclosed with respect to FIGS. 20 and 21. That is, all combinations of the features described below with respect to FIGS. 20 and 21 should be considered to be included in the disclosure as specific examples.

Referring to FIGS. 20 and 21, the electronic device 2 may include a front plate 21 (see FIG. 2), a frame 22, a display module 201 (see FIG. 3), and/or a second speaker assembly 21. Among a plurality of components disclosed in FIG. 20, at least one identical component that has been described with reference to FIGS. 3 and 6 will not be described herein.

According to an embodiment, the frame 22 may include a second speaker hole SH2 provided (or formed) in the fourth lateral portion 244. The second speaker hole SH2 may include, for example, a plurality of holes. The plurality of holes included in the second speaker hole SH2 may be arranged, for example, in a first direction (e.g., the +y-axis direction).

According to an embodiment, the second speaker assembly 2100 may be positioned in a space between the front plate 21 (see FIG. 2) and the frame 22. The second speaker assembly 2100 may be disposed on or combined with the frame 22 to correspond to the second speaker hole SH2 in a manner substantially the same as or at least partially similar to the manner in which the first speaker assembly 4 (see FIG. 3) is disposed on or combined with the frame 22 to correspond to the first speaker hole SH1 (see FIG. 3) of the frame 22.

According to an embodiment, at least a portion of the second speaker assembly 2100 may be positioned between the display module 201 (see FIG. 3) and the rear portion 23 (see FIG. 3) of the frame 22.

According to an embodiment, the second speaker assembly 2100 may be implemented at least partially the same as or similar to the first speaker assembly 4 (see FIG. 6). The second speaker assembly 2100 may include, for example, a second speaker module (e.g., the first speaker module 41), a second speaker housing 2110 (e.g., the first speaker housing 42 in FIG. 6), a sixth metal plate 2120 (e.g., the first metal plate 51 in FIG. 6), a seventh metal plate 2130, an eighth metal plate 2140, and/or a second air permeable member 2150 (or second air permeable material) (e.g., the first air permeable member 6). The second speaker module may include a second speaker 2161 (e.g., the first speaker 411 in FIG. 6) and a second electrical connection member 2162 (e.g., the first electrical connection member 412 in FIG. 6). The second speaker housing 2110 may include a third housing 2111 (the first housing 421 in FIG. 6) and/or a fourth housing 2112 (the second housing 422 in FIG. 6). The second speaker module, the sixth metal plate 2120, the seventh metal plate 2130, the eighth metal plate 2140, and/or the second air permeable member 2150 (or second air permeable material) may be disposed in the second speaker housing 2110.

According to an embodiment, the sixth metal plate 2120 may be disposed in the third housing 2111. The sixth metal plate 2120 may be disposed in the third housing 2111 in at least a partially identical or similar manner as, for example, the first metal plate 51 (see FIG. 6) is disposed in the first housing 421 (see FIG. 6). The sixth metal plate 2120 may include a third portion 2121 (e.g., the first portion 511 in FIG. 6) and a fourth portion 2122 (e.g., the second portion 512 in FIG. 6) extending from the third portion 2121. The third portion 2121 may overlap with the second speaker 2161 when viewed from above the front surface 20A of the electronic device 2 (see FIG. 2). The fourth portion 2122 may surround at least in part the third portion 2121 laterally when viewed from above the front surface 20A (see FIG. 2) or the rear surface 20B (see FIG. 2) of the electronic device 2. The fourth portion 2122 may not overlap with the second speaker 2161 when viewed from above the front surface 20A of the electronic device 2 (see FIG. 2).

According to an embodiment, the fourth portion 2122 of the sixth metal plate 2100 may be arranged in a loop shape surrounding the third portion 2121 of the sixth metal plate 2100 when viewed from above the front surface 20A (see FIG. 2) or the rear surface 20B (see FIG. 2) of the electronic device 2.

According to an embodiment, the fourth portion 2122 of the sixth metal plate 2100 may include a fourth protrusion 2123, a fifth protrusion 2124, and/or a sixth protrusion 2125 that protrude toward the rear portion 23 of the frame 22 (see FIG. 3).

According to an embodiment, the fourth protrusion 2123 may be arranged in a loop shape along the edge of the sixth metal plate 2120. The fourth protrusion 2123 may be formed, for example, in a manner at least partially identical or similar to the first protrusion P1 according to the example of FIG. 9. The fourth protrusion 2123 may be provided (or formed) by, for example, bending an outline portion (or outline area) included in the second portion 1802 of the sixth metal plate 2120 toward the rear portion 23 of the frame 22 (see FIG. 3).

According to an embodiment, the fifth protrusion 2124 and/or the sixth protrusion 2125 may be positioned between the fourth protrusion 2123 and the third portion 2121 when viewed from above the rear surface 20B of the electronic device 2 (see FIG. 2).

According to an embodiment, the fifth protrusion 2124 and/or the sixth protrusion 2125 may be formed in a manner at least partially identical to or similar to the second protrusion P2 according to the example of FIG. 9. The fifth protrusion 2124 and/or the sixth protrusion 2125 may be formed, for example, by bending a part of the fourth portion 2122 of the sixth metal plate 2120 convexly (or in a convex shape) toward the rear portion 23 of the frame 22 (see FIG. 3).

According to various embodiments, although not shown separately, the fifth protrusion 2124 and/or the sixth protrusion 2125 may be formed in at least a partially identical or similar manner to the second protrusion P2 according to the example of FIG. 11. The fifth protrusion 2124 and/or the sixth protrusion 2125 may be provided (or formed) by, for example, making a part of the fourth portion 2122 of the sixth metal plate 2120 thicker than the other part of the fourth portion 2122.

According to an embodiment, the fourth protrusion 2123 and the fifth protrusion 2124 may further reduce the transfer or transmission (e.g., leakage) of the magnetic force of the second speaker 2161 to the display module 201 (see FIG. 3) and/or the electromagnetic induction panel 305, compared to a comparative example (not shown separately) in which at least one of the fourth and fifth protrusions 2123 and 2124 is omitted.

According to an embodiment, the fourth protrusion 2123 and the sixth protrusion 2125 may further reduce the transfer or transmission (e.g., leakage) of the magnetic force of the second speaker 2161 to the display module 201 (see FIG. 3) and/or the electromagnetic induction panel 305, compared to a comparative example (not shown separately) in which at least one of the fourth and sixth protrusions 2123 and 2126 is omitted.

According to an embodiment, a combination of the fourth protrusion 2123 and the fifth protrusion 2124 (e.g., a first double protrusion structure) and a combination of the fourth protrusion 2123 and the sixth protrusion 2125 (e.g., a second double protrusion structure) may be arranged at portions of the sixth metal plate 2120 where the magnetic force of the second speaker 2161 relatively largely leaks to the display module 201 (see FIG. 3) and/or the electromagnetic induction panel 305 (see FIG. 3), thereby reducing or preventing the leakage. The combination of the fourth protrusion 2123 and the fifth protrusion 2124, and the combination of the fourth protrusion 2123 and the sixth protrusion 2125 may be arranged, for example, at portions of the sixth metal plate 2120 where the magnetic force of the second speaker 2161 is relatively largely concentrated.

According to an embodiment, the fifth protrusion 2124 and the sixth protrusion 2125 may be positioned at first and second positions of the sixth metal plate 2120, respectively, where the magnetic force of the second speaker 2161 is relatively highly concentrated. The shape (e.g., cross-sectional shape, height, and/or extension length) of the fifth protrusion 2124 and/or the sixth protrusion 2125 may be implemented to reduce or prevent the magnetic force of the second speaker 2161 from leaking to the display module 201 (see FIG. 3) and/or the electromagnetic induction panel 305 (see FIG. 3).

According to an embodiment, when viewed from above the rear surface 20B of the electronic device 2 (see FIG. 2), the fifth protrusion 2124 may extend corresponding to a portion of the fourth protrusion 2123. When viewed from above the rear surface 20B of the electronic device 2 (see FIG. 2), the sixth protrusion 2125 may extend corresponding to another portion of the fourth protrusion 2123.

According to an embodiment, when viewed from above the rear surface 20B of the electronic device 2 (see FIG. 2), the fifth protrusion 2124 and/or the sixth protrusion 2125 may extend substantially parallel to a portion of the first protrusion 1810. The fifth protrusion 2124 and/or the sixth protrusion 2125 may extend in a straight shape, for example, when viewed from above the rear surface 20B of the electronic device 2 (see FIG. 2).

According to an embodiment, when viewed from above the rear surface 20B of the electronic device 2 (see FIG. 2), the fifth protrusion 2124 and the sixth protrusion 2125 may be positioned spaced apart from each other in the first direction (e.g., the +y-axis direction).

According to an embodiment, when viewed from above the front surface 20A of the electronic device 2 (see FIG. 2), the second speaker 2161 may be positioned closer to the fourth lateral portion 244 of the frame 22 including the second speaker hole SH2 than the fifth protrusion 2123 and/or the sixth protrusion 2124. When viewed from above the front surface 20A of the electronic device 2 (see FIG. 2), the second speaker 2161 may be positioned between the combination of the fifth and sixth protrusions 2124 and 2125 and the fourth lateral portion 244. When viewed from above the front surface 20A of the electronic device 2 (see FIG. 2), the combination of the fifth and sixth protrusions 2124 and 2125 may be positioned spaced apart from the fourth lateral portion 244 with the second speaker 2161 therebetween.

Although not shown separately, the relative position and/or shape (e.g., cross-sectional shape, height, and/or extension length) of the fifth protrusion 2124 and/or the sixth protrusion 2125 with respect to the fourth protrusion 2123 may vary and is not limited to the illustrated example so as to reduce or prevent the magnetic force of the second speaker 2161 from leaking to the display module 201 (see FIG. 3) and/or the electromagnetic induction panel 305 (see FIG. 3).

According to an embodiment, the seventh metal plate 2130 and/or the eighth metal plate 2140 may play substantially the same role as the second metal plate 52, the third metal plate 53, and/or the fourth metal plate 54 included in the first speaker assembly 4 of FIG. 6. The seventh metal plate 2130 and/or the eighth metal plate 2140 may reduce or prevent electromagnetic interference (EMI) to the second speaker 2161. The seventh metal plate 2130 and/or the eighth metal plate 2140 may reduce or prevent magnetic force from the second speaker 2161 from being transmitted or transferred to the outside of the second speaker assembly 2100. The seventh metal plate 2130 and/or the eighth metal plate 2140 may include an electromagnetic shielding material or an electromagnetic absorbing material. Although not shown separately, the position or shape of the metal plate included in the second speaker assembly 2100 is not limited to the illustrated seventh metal plate 2130 and/or eighth metal plate 2140 and may vary.

According to an embodiment, the second air permeable member 2150 may be disposed in a seventh opening formed in the second speaker housing 2110 (e.g., the third housing 2111). The seventh opening may be an air vent that allows air to flow between the inside of the second speaker assembly 2100 and the outside of the second speaker assembly 2100. The air may flow through the second air permeable member 2150 disposed in the seventh opening. The seventh opening may improve the quality of sound output through the second speaker 2161. The second air permeable member 2150 may reduce or prevent external foreign substances, such as dust or moisture, from entering the internal space of the second speaker housing 2110 through the seventh opening. The second air permeable member 2150 may include, for example, a porous member or a mesh member.

According to various embodiments, although not shown separately, the technical features of the disclosure can be applied to example electronic devices of other external shapes (e.g., a bar type electronic device, a slidable electronic device, a stretchable electronic device, or a rollable electronic device) that are not limited to the example electronic device 2 of the plate type.

According to an example embodiment of the disclosure, an electronic device (e.g., the electronic device 2) includes a housing 20, a display module 201, a speaker (e.g., the first speaker 411), a speaker housing (e.g., the first speaker housing 42), and a metal plate (e.g., the first metal plate 51). The housing 20 forms at least in part a front surface 20A of the electronic device, a rear surface 20B of the electronic device, and a side surface 20C of the electronic device. The display module 201 is accommodated in the housing 20 and visually seen through the front surface 20A of the electronic device. The speaker is positioned between the display module 201 and the rear surface 20B of the electronic device. The speaker housing accommodates the speaker. The metal plate is positioned between the display module and the speaker and disposed in the speaker housing. The metal plate includes a magnetic shielding material. The metal plate includes a first surface 51A facing the speaker and a second surface 51B facing in an opposite direction to the first surface 51A. The first surface 51A includes a first region 901 overlapping with the speaker and a second region 902 surrounding at least in part the first region 901 when viewed from above the front surface 20A of the electronic device. The second region 902 includes a first protrusion P1 and a second protrusion P2 protruding toward the rear surface 20B of the electronic device with respect to the first region 901. The second protrusion P2 is positioned between the first protrusion P1 and the first region 901.

According to an example embodiment of the disclosure, the electronic device 2 may further include an electromagnetic induction panel 305 included or arranged in the display module 201.

According to an example embodiment of the disclosure, the first protrusion P1 may be formed by bending an outline portion of the metal plate (e.g., the first metal plate 51) toward the rear surface 20B of the electronic device.

According to an example embodiment of the disclosure, the second protrusion P2 may be formed by bending a part of the metal plate (e.g., the first metal plate 51) convexly toward the rear surface 20B of the electronic device.

According to an example embodiment of the disclosure, the second protrusion P2 may be formed by making a part of the metal plate (e.g., the first metal plate 51) thicker from the second surface 51B than other part of the metal plate (e.g., the first metal plate 51).

According to an example embodiment of the disclosure, the second protrusion P2 may be positioned corresponding to a corner 1203 where two edges (e.g., the first edge 1201 and the second edge 1202) of the metal plate (e.g., the first metal plate 51) meet.

According to an example embodiment of the disclosure, the metal plate (e.g., the first metal plate 51) may include SPCC.

According to an example embodiment of the disclosure, the speaker housing (e.g., the first speaker housing 42) may include an opening positioned between the metal plate (e.g., the first metal plate 51) and the speaker (e.g., the first speaker 411). The metal plate may block the opening.

According to an example embodiment of the disclosure, the electronic device (e.g., the electronic device 2) may further include other metal plate (e.g., the second metal plate 52) disposed on the speaker housing (e.g., the first speaker housing 42). The speaker (e.g., the first speaker 411) may be positioned between the metal plate (e.g., the first metal plate 51) and the other metal plate (e.g., the second metal plate 52).

According to an example embodiment of the disclosure, the metal plate (e.g., the first metal plate 51) may include a metallic material having superior magnetic shielding properties than the other metal plate (e.g., the second metal plate 52).

According to an example embodiment of the disclosure, a diaphragm 760 included in the speaker (e.g., the first speaker 411) may be disposed toward the rear surface 20B of the electronic device.

According to an example embodiment of the disclosure, the housing 20 may include a speaker hole (e.g., the first speaker hole SH1) formed on the side surface 20C of the electronic device. The speaker housing (e.g., the first speaker housing 42) may include a sound output hole corresponding to the speaker hole.

According to an example embodiment of the disclosure, a speaker assembly (e.g., the first speaker assembly 4) includes a speaker housing (e.g., the first speaker housing 42), a speaker (e.g., the first speaker 411), and a metal plate (e.g., the first metal plate 51). The speaker is accommodated in the speaker housing. The metal plate is disposed in the speaker housing. The metal plate includes a magnetic shielding material. The metal plate includes a first surface 51A facing the speaker and a second surface 51B opposite the first surface 51A. The first surface 51A includes a first region 901 overlapping with the speaker and a second region 902 surrounding at least in part the first region 901. The second region 902 includes a first protrusion P1 and a second protrusion P2 protruding with respect to the first region 901. The second protrusion P2 is positioned between the first protrusion P1 and the first region 901.

According to an example embodiment of the disclosure, the first protrusion P1 may be formed by bending an outline portion of the metal plate (e.g., the first metal plate 51).

According to an example embodiment of the disclosure, the second protrusion P2 may be formed by bending a part of the metal plate (e.g., the first metal plate 51) convexly.

According to an example embodiment of the disclosure, the second protrusion P2 may be formed by making a part of the metal plate (e.g., the first metal plate 51) thicker from the second surface 51B than other part of the metal plate (e.g., the first metal plate 51).

According to an example embodiment of the disclosure, the second protrusion P2 may be positioned corresponding to a corner 1203 where two edges (e.g., the first edge 1201 and the second edge 1202) of the metal plate (e.g., the first metal plate 51) meet.

According to an example embodiment of the disclosure, the metal plate (e.g., the first metal plate 51) may include SPCC.

According to an example embodiment of the disclosure, the speaker assembly (e.g., the first speaker assembly 4) may further include other metal plate (e.g., the second metal plate 52) disposed on the speaker housing (e.g., the first speaker housing 42). The speaker (e.g., the first speaker 411) may be positioned between the metal plate (e.g., the first metal plate 51) and the other metal plate (e.g., the second metal plate 52).

According to an example embodiment of the disclosure, the metal plate (e.g., the first metal plate 51) may include a metallic material having superior magnetic shielding properties than the other metal plate (e.g., the second metal plate 52).

The embodiments disclosed in this disclosure and the drawings are merely provided as examples to more easily explain the technical content and to help understand the disclosure, and are not intended to limit the scope of the disclosure. Accordingly, the scope of various embodiments of the disclosure should be interpreted to include modified or altered forms in addition to the embodiments disclosed herein. Additionally, it will be understood that any embodiment(s) described herein can be used in conjunction with any other embodiment(s) described herein. In particular, it is emphasized that although the disclosure has been presented in a form that provides a number of embodiments each defining a number of features, some of these embodiments are connected only by reference to the same drawing or drawings. It should be understood that the disclosure includes all combinations of these embodiments, unless there is an apparent contradiction between two (or more) embodiments. That is, if features are presented as optional in the disclosure, all combinations of such optional features are included in the disclosure.

## Claims

1. An electronic device (2) comprising:
a housing (20) forming at least in part a front surface (20A) of the electronic device (2), a rear surface (20B) of the electronic device (2), and a side surface (20C) of the electronic device (2);
a display module (201) accommodated in the housing (20) and visually seen through the front surface (20A);
a speaker (411) positioned between the display module (201) and the rear surface (20B);
a speaker housing (42) accommodating the speaker (411); and
a metal plate (51) positioned between the display module (201) and the speaker (411) and disposed in the speaker housing (42),
wherein the metal plate (51) includes a magnetic shielding material,
wherein the metal plate (51) includes a first surface (51A) facing the speaker (411) and a second surface (51B) facing in an opposite direction to the first surface (51A),
wherein the first surface (51A) includes a first region (901) overlapping with the speaker (411) and a second region (902) surrounding at least in part the first region (901) when viewed from above the front surface (20A), and
wherein the second region (902) includes a first protrusion (P1) and a second protrusion (P2) protruding in a direction toward the rear surface (20B) with respect to the first region (901), and the second protrusion (P2) is positioned between the first protrusion (P1) and the first region (901).

2. The electronic device of claim 1, further comprising:
an electromagnetic induction panel (305) included or arranged in the display module (201).

3. The electronic device of claim 1 or 2, wherein the first protrusion (P1) is formed by bending an outline portion of the metal plate (51) toward the rear surface (20B).

4. The electronic device of any one of claims 1 to 3, wherein the second protrusion (P2) is formed by bending a part of the metal plate (51) convexly toward the rear surface (20B).

5. The electronic device of any one of claims 1 to 3, wherein the second protrusion (P2) is formed by making a part of the metal plate (51) thicker from the second surface (5 1 B) than other part of the metal plate (51).

6. The electronic device of any one of claims 1 to 5, wherein the second protrusion (P2) is positioned corresponding to a corner where two edges of the metal plate (51) meet.

7. The electronic device of any one of claims 1 to 6, wherein the metal plate (51) includes steel plate cold commercial (SPCC).

8. The electronic device of any one of claims 1 to 7, wherein the speaker housing (42) includes an opening positioned between the metal plate (51) and the speaker (411), and
wherein the metal plate (51) blocks the opening.

9. The electronic device of any one of claims 1 to 8, further comprising:
other metal plate (52) disposed on the speaker housing (42),
wherein the speaker (411) is positioned between the metal plate (51) and the other metal plate (52).

10. The electronic device of claim 9, wherein the metal plate (51) includes a metallic material having superior magnetic shielding properties than the other metal plate (52).

11. The electronic device of any one of claims 1 to 10, wherein a diaphragm (760) included in the speaker (411) is disposed toward the rear surface (20B).

12. The electronic device of any one of claims 1 to 11, wherein the housing (20) includes a speaker hole (SH1) formed on the side surface (20C), and
wherein the speaker housing (42) includes a sound output hole (803) corresponding to the speaker hole (SH1).
